(19) Europäisches Patentamt
European Patent Office
Office européen des brevets

(11) EP 2 698 196 B1

# (12) EUROPEAN PATENT SPECIFICATION

(45) Date of publication and mention of the grant of the patent:
**17.12.2014 Bulletin 2014/51**

(21) Application number: **12763828.6**

(22) Date of filing: **29.03.2012**

(51) Int Cl.:
***B01J 19/08*** (2006.01) ***C01B 33/023*** (2006.01)
***C01G 23/00*** (2006.01) ***C22B 34/12*** (2006.01)

(86) International application number:
**PCT/UZ2012/000001**

(87) International publication number:
**WO 2012/135872 (04.10.2012 Gazette 2012/40)**

## (54) METHOD FOR OBTAINING SILICON AND TITANIUM BY GENERATING ELECTROMAGNETIC INTERACTIONS BETWEEN SIO2 AND FETIO3 PARTICLES AND MAGNETIC WAVES

VERFAHREN ZUR GEWINNUNG VON SILIZIUM UND TITAN DURCH ERZEUGEN ELEKTROMAGNETISCHER WECHSELWIRKUNGEN ZWISCHEN SIO2 UND FETIO3 TEILCHEN UND MAGNETISCHER WELLEN

PROCÉDÉ DE RÉDUCTION DE SILICIUM ET DE TITANE PAR LA GÉNÉRATION D'INTERACTIONS ÉLECTROMAGNÉTIQUES DE PARTICULES DE SIO2, FETIO3 ET D'ONDES MAGNÉTIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.03.2011 UZ 1100114**

(43) Date of publication of application:
**19.02.2014 Bulletin 2014/08**

(73) Proprietor: **Kolesnik, Viktor Grigorjevich**
**Tashkent 100214 (UZ)**

(72) Inventors:
- **URUSOVA, Elena Viktorovna**
  **Tashkent 100029 (UZ)**
- **BASOVA, Evgeniya Sergeevna**
  **Tashkent 100214 (UZ)**
- **KIM, Jun Sik**
  **Province Kengido (KR)**
- **ABU SHAKRA, Maksim Bassamovich**
  **Tashkent 100031 (UZ)**
- **SIM, Sergey Vadimovich**
  **Tashkent 100138 (UZ)**
- **KIM, Dzhin Bon**
  **Engdyngpo-Gu 150-879 (KR)**

(74) Representative: **Diehl & Partner GbR**
**Patentanwälte**
**Erika-Mann-Strasse 9**
**80636 München (DE)**

(56) References cited:
**RU-C2- 2 237 616** **RU-C2- 2 298 588**
**US-A1- 2007 172 406** **US-A1- 2008 145 687**
**US-A1- 2009 107 290** **US-B1- 6 277 168**

- **KNIPPING J ET AL: "SYNTHESIS OF HIGH PURITY SILICON NANOPARTICLES IN A LOW PRESSURE MICROWAVE REACTOR", JOURNAL OF NANOSCIENCE AND NANOTECHNOLOGY, AMERICAN SCIENTIFIC PUBLISHERS, US, vol. 4, no. 8, 1 November 2004 (2004-11-01), pages 1039-1044, XP008060990, ISSN: 1533-4880, DOI: 10.1166/JNN.2004.149**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 698 196 B1

## Description

### 1. TECHNICAL FIELD

The present invention relates to a method for generation of microwave (MW) electromagnetic (EM) interactions for useful element extraction and industrial processing of silicon and titanium containing and other mineral raw materials in dry form, metallization of iron-ore pellets, ash wastes and other raw materials.

### 2. BACKGROUND

Taking into account the wide scope of proposed method of generation microwave magnetic and electric waves and fields for industrial application, we'll justify it in common the method of silicon and titanium dioxide production as result of MW oxidation-reduction reactions in EM fields and waves. We'll use known methods close to the said invention. On the basis of large amount of experimental data we made fundamental conclusion on resonant nature of interaction of electric, magnetic and EM fields with charged particle. The success in direction of unlimited in time stable charged particle cluster confinement is in the study of resonant conditions of interaction between field and charged particle, and energy exchange between them [1]. We'll consider resonant energy exchange in solid state and gaseous medium.

The interaction has resonant mechanics but unlike other authors we think there is no need to arrange interaction on resonance mode of definite type and frequency. The nature of radiation of our apparatus is radical different from that of magnetron or klystron type MW generators which then is transmitted through evanescent waveguide to reaction MW chamber presenting itself closed volume resonator of MW range having carrying mode type (TE, TEM). In our case there are no waveguides and closed volume resonator. The radiation is immediate produced in the treated sample itself and the frequency range corresponds to resonant frequencies of sample material. The volume resonator is open type (piece of tube) is absent because energy compression into center of mass and rotating magnetic field screen around "rotating current loop - plasmoid" provide stable operation of apparatus without special chamber construction where plasma is confined.

A method is known of silicon production by Chemical Vapor Deposition (CVD) from silicon-containing gas with addition of hydrogen and chlorine gases in fluidized bed reactor, so called chlorosilane technology. This method was elaborated and implemented in industry for semiconductor silicon production by Siemens.

Typical processes and apparatuses are disclosed in Siemens process, where silicon is deposited by hydrogen reduction of one from silanes (dichlorosilane, trichlorosilane or their mixture) on silicon bar by electrical resistance heating method as described in US Pat. No.3,286,685, and Komatsu process where silicon is deposited by thermal decomposition of silane as described in US Pat. No.4,148,814 and 4,150,168.

In US Pat. No.4,148,814 (see also US Pat. No. 4,900,411) silicon bar is heated to about 1000° to 1200°C by resistance heating while in US Pat. No.4,150,168 it is heated to thermal decomposition temperature about 800°C. The reactors of both processes have the same type of quartz, or stainless steel bell housing and reactor wall is cooled below 300°C by a coolant (water or air) so that silicon is not deposited on the inner wall, but have a disadvantage in that polysilicon deposition rate is low, while unit energy consumption is high because of the batch process using silicon bar provides small surface area for deposition.

To reduce the effects of these disadvantages, a fluidized bed process has been proposed to provide in fluidized bed where silicon from silicon-containing gas is deposited onto silicon grains while silicon grains having a large depositing area are fluidized by silicon-containing gas and carrier gas.

The fluidized bed process as mentioned above, however, generally employs "an external heating methods" where the temperature of the reactor is higher than that of heated materials, which brings about (to) wall deposition. This heating method brings about a large amount of heat loss to the environment from system, and also, it makes it very difficult to build a large diameter reactor due to limitation of the heat supply needed for CVD. Thermal CVD decomposition of silanes causes silicon deposition onto the inner wall of reactor, whereby not only is reactor inner volume reduced but also heat conduction becomes worse operated. Moreover, in the case of a quartz reactor, it may be cracked while the reactor is cooled, due different thermal expansion coefficient between the quartz reactor and deposited silicon. For industrial application quartz tubes are not valid.

Internal heating installation instead of external heating in the system was proposed as a means of reducing the effect of disadvantages mentioned above. However, in the process using internal heater, silicon is deposited on the heater surface, which makes it impossible to use the process for a long time. There still remain problems related to maintenance and exchange of polysilicon resistance heater plugged in reactor. The heater itself causes some problems in making good fluidization and adds impurities due to direct contact with silicon grains, and also it occupies some volume of reactor, which reduces effectiveness of the process.

Presently various constructions of fluidized bed reactors principally few distinguish each other for production of pure polysilicon are known. There silicon and silicon containing gas (silicon tetrachloride, monosilane, chlorosilane,

dichlorosilane, trichlorosilane) or their mixture in liquefied state is supplied from nozzle to reactor beneath. Fluidized bed is formed by hydrogen blown under pressure from orifice-nozzle disposed alongside. Hydrogen while passing through silicon containing liquefied gas breaks it to drops or fine-dispersed suspension. The suspension is heated in heating zone occupying definite height along axis of cylindrical reactor and elevates to reaction zone, which is located above heating zone. In reaction zone silicon-containing gas is decomposed according endothermic reactions:

$$SiO_2 + 2Cl_2\uparrow + 2H_2\uparrow = SiCl_4 + 2H_2O\uparrow - Q$$

$$SiCl_4 + 2H_2\uparrow = Si + 4HCl\uparrow - Q$$

According these reactions it is possible to produce silicon by our proposed method. Produced free atomic silicon is deposited on cooled surfaces forming crystal phase of poly- or mono-silicon. Deposition of silicon happens non-selectively, i.e. on any cooled surface. For production of pure poly- or mono-crystalline silicon of semiconductor or solar quality satisfying established (RU 2,340,551 C2), poly-silicon seed grains as deposition surfaces are used (RU2,340,551C2; Jorg Knipping et al./High Purity Silicon Nanoparticles /J.Nanosci.Nanotech. (2004) Vol.4, No8: 1039-1044), which are increasing in diameter - are growing accumulation deposited silicon. Heavier grains are deposited from fluidized bed and are collected in collector for periodical removal of ready product.

In Siemens reactor and in some others (RU 2,334,677 C1) seed particles are not fed into reactor and deposition of silicon during decomposition of silicon-containing gas happens on high-purity poly- or mono-silicon bar or electrode as in patent (RU 2,334,677 C1; RU 2,342,320 C2; RU2,342,320 C2). The shortcoming of such reactor is discreteness of its operation: it is necessary to stop process for changing silicon bar or electrode to new one. And there is complication with ingress of impurities to ready product from reactor walls and surfaces of bar or electrode where silicon is deposited. For solving this problem deposition reaction in many cases is done in inert gas (argon) atmosphere. (Jorg Knipping et al.).

In some cases there is need to produce narrow size distribution of silicon grains (Jorg Knipping et al.; US Pat. No. 7,029,632 B1; RU 2,340,551 C2) without agglomerates in final product. (US Pat. No.7,029,632 B1). Deposition speed, uniformity, form of size distribution function and agglomerate forming percent are related to uniformity of heating of fluidized bed, which is determined by design, physical nature and action principle of heating source (Jorg Knipping et al). Two main heating source types used in fluidized bed reactors for pure silicon production are known: 1. those using resistive convectional heating and 2. using radiation of determined range (this division is rather relative as there are always three types of heat transfer - thermal conduction, convection and radiation)

Fluidized bed reactors for silicon using radiation for heating may be divided into three groups by radiation type: thermal range, MW and optical range - with laser sources. There EM energy of waves in definite range, penetrating into inner part of reactor, into heating zone and reaction zone without direct contact with silicon-containing gas and final product, heat fluidized bed by its absorption. In patent US Pat. No. 5,810,934 it is proposed to feed needed energy for reaction by focusing of EM energy beam in accordance with frequency distribution of absorption spectrum of silicon-containing gas. For this purpose it is proposed to create laser source with tuned laser frequency to definite composition of silicon-containing gas. For example, neodymium-yttrium-aluminum-garnet Nd:YAG - laser on 1,064 mc wavelength or $CO_2$ - laser on 10,6 mc wavelength may be successfully used for trichlorosilane reactor but the latter one can't be used for silane reactor. Such reactor will be to expensive and its operation is unstable because it is requirement of frequent fine tuning during variations in reaction mixture.

Various designs of microwave fluidized bed reactors for pure polycrystalline silicon production are described in following patents: US Pat. No. 4,900,411; 4,930,442; 5,597,623; 5,382,412 etc. The advantages of MW heating are not only in absence of direct contact between gases and product but as well in high effectiveness of MW radiation interaction with substance as mentioned by authors (US Pat. No. 2008/0272144 A1; 5,023,056; 6,365,885 B1; RU 2007/104587 A1; Rustum Roy et al./Definite experimental evidence for MW Effects/Mat Res Innovat (2002) 6: 128-140).

Reactors with MW heating are used e.g. by Canon (Japan) for production of thin jewelry quality coatings for photo-devices productions (US Pat. No.5,597,623). But all MW sources have efficiency about 60% and it's not good for industrial use.

In design of fluidized bed reactor with MW heating described in patent of Yoon Poong et al. from Korea Research Institute of Chemical Technology an attempt was made to overcome non-uniformity of MW field by using simultaneously two magnetrons, which filed configurations are orthogonal (US Pat. No.4,786,477; 4,900,411). Problems with needed MW power originated by group of authors (Hee Y. Kim et al.) during scaling-up (US Pat. No.5,374,413; 5,382,412) remained unsolved.

Reactors with MW heating have some shortcomings preventing their wide use in industry: low power of sources -magnetrons; non-uniformity of heating, formation of hot/cold spots, corresponding the anti-nodes/nodes in EM field distribution in reactor as in volume, closed resonator, which causes formation of agglomerates of deposited particles; the necessity to use for reactor walls MW transparent materials, e.g. quartz glass, which is not construction functional (fragile, contains impurities).

Fluidized bed reactors with thermal radiation source as heater were proposed (US pat. No.7,029,632 B1), made in form of cylinder and having more uniform heating and absence of deposition on walls and agglomerates. But effectiveness of such heating is not high (energy losses on walls and the whole apparatus).

The authors of patent (US Pat. No.6,365,885 B1; 2008/0272114 A1) note relation of MW heating effectiveness with dielectric and magnetic properties of irradiated material samples. They offer to use for various samples separately electric or magnetic component of MW EM field and it was implemented in their apparatus design. Their data are agreed with ours: dielectrics are more actively interacting with electric field, which causes their polarization, and further ionization and heating; conductors, especially ferrites are actively heated in magnetic field.

To avoid the shortcomings some authors propose to joint several heating physical mechanisms: convection resistive heating with MW irradiation of mixture (US Pat. No.5,023,056), and also production of pure polycrystalline silicon or amorphous silicon in MW discharge plasma (Yuri Bakanov et al./Proposal for Obtaining silicon polycrystalline in plasma of the MW discharge/2/2006, Internet publication; RU 2,329,196 C1; RU 2007/104,587 A; US Pat. No. 4,532,199; 4,998,503; 5,521,360; 6,888,094 et al). The designs of reactors based on plasma-MW technologies are experimental and are in elaboration stage.

3. PRIOR ART PATENTS

(By set of features - plasma, MW heating)

Our method and its implementation construction are unique and practically there are no analogs to them.

In patent RU 2 340 551 from 19.11.2003 (EP 2004/012889, DE10353996.4) was proposed the method of production nanocrystals of silicon powder of semiconductor quality from silane (or mixture of silicon containing gases) in MW plasma rediation in range 900-2500 MHz (915 MHz - preferable) at extra pressure 10-1100 mbar in the hydrogen medium and noble gas (argon) with/without dopant material. This method may be considered as prior art of proposed invention by tree distinctive features:

1. deposition of silicon is made in plasma medium, which is generated
2. from silica powder
3. in hydrogen medium.

In proposed method pure polycrystalline silicon is produced by deposition of silicon from silicon containing powder in noble gas medium (in particular argon) in electron-ion current loop generated in broad, in particular MW range of EM waves resonantly. But generator of radiation in this invention is not magnetron, which is the reason of non-uniform heating in MW field, creation of agglomerates and deposition on the walls and comparatively low efficiency. EM waves are generated by particles of silicon containing gas in travelling EM field with resonant pumping of current into RLC-circuit, what is absent in analogue. Similarly it is also for $FeTiO_3$.

Another analog of proposed invention may be e.g. the nozzle of MW plasmotron with elevated torch stability (RU 2007 104 587 A from 07.07.2004 (US Pat. No.10/885,237)), where MW torch is arranged inside quartz tube-resonator joined with channel of gas passage. There is provided conducting rod-electrode for creation field inside tube for gas supply simultaneously being MW resonator in the second analog. But MW source in RU 2007 104 587A as in RU 2 340 551 is magnetron, which is absent in proposed invention. To overcome inhomogeneity of magnetron heating plasma generation system in RU 2007 104 587A contains phase-rotator for MW phase control in MW resonator presenting itself sliding short circuit. It is complicated mechanism which can't operate at large powers. Plasma generation system in RU 2007 104 587 A also contains system consisted several pairs of magnets along tube of gas supply for interaction of MW radiation with fed gas, that being low effective, unreliable and having low effectiveness (60%).

Analog of plasma reduction of titanium oxides can be invention US Pat. No.2009/0107290A1, Apr.30.2009 «Plasma-based reduction of titanium». Invention discloses method of titanium and other metal oxides till metals using non-hot plasma. Non-hot plasma is used with argon and hydrogen or some other gases.

For titanium production usually ilmenite or rutile is used, and by complex chemical transformations by Kroll process ore is transformed into porous material by chlorination of ore with titanium tetrachloride production. Rutile and ilmenite are titanium oxides ($TiO_2$ etc). Oxygen is removed as $CO_2$ or CO and colorless liquid $TiCl_4$ is obtained. Then liquid by continuous distillation is purified on fractions. The cleaned product reacts with magnesium or sodium (one of them) in inert atmosphere till metallic titanium sponge production, which was crushed and pressed before melting in melting electrode vacuum arc furnace at very high temperature and heat consumption. The molten ingot with several tons weight cooled in vacuum furnace. This standard Kroll process in great extent is reason of high cost of metallic titanium.

In experimental study (US Pat. No.2009/0107290A1) was shown that microwave excited argon-hydrogen plasma can reduce titanium oxides till sub-oxides and metallic titanium at relatively low temperatures during rather short time. MW excitation of argon-hydrogen plasma supposes availability of MW generator. As it is known their efficiency is

around 50-60% and it's not economically efficient. Moreover taking into account the large volumes of processed ilmenite the power of existing MW generators is not enough for industrial application. Argon-hydrogen plasma gives possibility for oxidation-reduction reactions in other minerals of various compounds including ilmenite and titanium oxides.

The variety of reductive gases: argon-hydrogen, CO, methane and their mixtures used with plasma are traditional and well studied. Economically they can be less attractive than solid reductants such as coke, brown coal, graphite etc. Besides, for set-up with high productivity there is need in creation of hydrogen stations. There is no also separation of iron, its oxides and titanium after $TiO_2$ production for titanium white manufacturers, thus demanding considerable expenses for separation process of modified ilmenite. Iron and titanium after treatment in argon-hydrogen plasma are in weakly bound state and are not separated magnetically.

In supposed invention as reducing agent are used solid carbon containing substances: graphite, brown coal, coke. Apparatus comprises CO generator for CO production for oxidation-reduction transformations. The working mixture is polarized and heated in first cascade of MVD irradiation and then in the second cascade is heated till 900°C in resonance regime. Feedstock is given into reactor in mixture with oxidant and slowly passed in stream through resonant area of reactor. Oxidation-reduction transformation and phase transition $Fe_2O_3 \rightarrow Fe_3O_4$ are organized resonantly in running magnetic field of current loop, which is absent in analog. There is no resonant interaction there, which allows to grind and carry out phase transition with low electro energy consumption.

In claimed method in the absence of magnetron as MW generator of resonant radiation wide (in particular MW) range are ionized atoms and molecules of heated substance itself (the mixture of butch) being in running magnetic field. The running field (magnetic) in current loop of electrons and ions creates ionization and as a sequence generation of high power MW field in closed volume of current loop with efficiency about 96 percent as opposed to analogues with efficiency about 50 percent. Electron-ion current loop formed in irradiated butch (feedstock) immediately, running magnetic field and current loop in other technologies are absent, low efficiency about 50 percent.

The interactions of magnetic, electric rotating waves with the bunch of charged particles produced in potential electrostatic field in regime of parametric and magnetic resonances are used to obtain magnetic pumping and confinement of energy in running magnetic field. As magnetic energy pumping mechanism resonant amplification of EM waves with magnetic-inertial confinement of bunch of charged particle is used, what is absent in all observed analogues. The term "magnetic-inertial confinement" means physical mechanisms of magnetic compression and inertial rotation of magnetic energy and feedstock particles or micro and macro particles. The terms "confine", "compress", "accumulate" are relative and are used for description of closed mechanisms of energy rotation in a spiral towards center with frequency and phase changes for particles, magnetic and electric waves and their combinations. Self-consistent resonant state in the system "EM - bunch of charged particles" is considered as stable state named "magnetic V dipole" (MVD). The series of our experiments confirmed such states.

Our works are devoted to study of self-consistent resonant states "magnetic wave - cluster of charged particles" in electrostatic field. Continuous confinement of magnetic energy was obtained, for example our patent UZ IAP 03701 " A method of nuclear energy production" [1]. This invention is analog of presenting invention. In the invention [1] was given in account theoretical and practical essences of nuclear energy production. From the invention description is it is clear, that nuclear energy obtaining methods can be used for molecular transformation on crystalline lattice level of minerals, these are $SiO_2$, $FeTiO_3$ and others.

In proposed invention we'll consider complex of electro-physical, electric, magnetic transformations concerning energy transformations together with raw material particles on molecular level. The proposed invention is continuation of earlier works in absolutely new quality, in new operable regimes of magnetic and electric transformations for magnetic waves and substance. We are intending to implement them in industry.

The transformations of energy are unified in single magnetic-inertial system in oscillator-rotation model. Rotating oscillator has two inertial frames which are separated relatively by boundary. Mechanisms of EM field transformations are presented by differential equations. Our conclusions are made on basis of classic electrodynamics field conception (Maxwell, Helmholtz, Hamilton-Jacobi equations, Lorentz transformations) thus permitting in dynamics implement effect of interaction of wave-particle. At definite relation of electric and magnetic energy (phase angle $\varphi$) established in MVD it becomes possible to make magnetic pumping and confinement of charged particle cluster without time limitation. The cluster of particle in this case is in state of stable oscillator-rotating movement in accordance with empirically got relation: $mc^2 \sim CU^2 \sim nh\nu$. This relation binds quantum-wave and electric parameters of system: energy of particle $E=mc^2$, energy in oscillation circuit $E=CU^2/2$ and EM wave energy excited in resonant system $E=nh\nu$.

## 4. BRIEF DESCRIPTION OF INVENTION

In our invention it is proposed method magnetic energy pumping for generation of EM interactions of magnetic waves MVD in silicon, titanium, gold, rare earth elements containing feedstock and iron-ore pellets and other dry bulk solids:

1. Preliminary cleaning, drying and raw material preparation in EM MW field, obtaining of fine-dispersion powder;
2. Heating, polarization and ionization of raw materials in EM field of high voltage (1÷100 KV type) in the medium of hydrogen and argon or solid reductants: graphite, coke, brown coal etc in the first stage of processing;
3. Generation of electron-ion current loop in running magnetic field of ionized particles cluster in the medium of hydrogen and argon (or graphite, coke, brown coal etc) in electric field of medium voltage (1÷0.3 kV type);
4. Formation of phase transformations of $Fe_2O_3 \rightarrow Fe_3O_4$ type, destruction of crystal structure of oxides (silicon, titanium oxides, ilmenite), oxidation and reduction;
5. Conduction of oxidation-reduction transformations in ionized state of raw material substance - reduction of silicon, titanium, iron etc by propane, solid reagents, hydrogen in argon medium or their mixture in magnetic field of MW range of low voltage and high current (up to 0.1 kV type) in the second stage of processing;
6. Coagulation and formation of particles or ingots of polycrystalline silicon, metallic titanium and iron.

The processes are conducted in several stages with definite task in each stage: polarization, heating, ionization, phase transformations of $Fe_2O_3 \rightarrow Fe_3O_4$ type, oxidation-reduction reactions, coagulation of oxides of silicon and titanium and other operation, which are absent in analogs.

5. MODEL OF ROTATING ENERGY OSCILLATOR

If electron-ion cluster movement is realized at simultaneous availability permanent strengths of electric E and magnetic H fields, which are perpendicular initial direction of non relativistic cluster movement, when strength of electric field E much less strength of magnetic field H, so particle trajectories can be presented as amount of two movements in direction, that is perpendicular cross fields with constant (drift) velocity $\upsilon_d$ = c E/H. In plant, that is perpendicular magnetic field, electron-ion cluster is rotated along circle with cyclotron frequency and radius R = ($\upsilon_0$ = c E/H)/$\omega$, where $\upsilon_0$ is initial velocity of electron-ion cluster. Radius can be confined constant at constant E, while H and $\omega$ continuously increasing, what we'll demonstrate realizing magnetic pumping and magnetic-inertial confinement of cluster.
Let's suppose that energy transformations in MVD occur according the following model. The movement of energy along closed trajectory of space-time in self-consistent state we name rotating oscillator. Rotating oscillator has two inertial frames - external ($^+$) and internal ($^-$), which are separated by boundary in form of circle (o) (Fig.1). According relativity theory two independent events happening in two independent inertial frames can be considered as one event in some third inertial frame being unification first two independent inertial frames. Then event $A_0$ happening in third inertial frame is link between first $^+$A and second $^-$A event in first and second inertial frames. Through this third event $A_0$ (Fig.2) bond between $^+$A ℵ $^-$A implements, for example, in form of energy exchange between $^+$A and $^-$A through $A_0$. Let's present $^+$A and $^-$A lying on catheti of rectangular triangle. In this case they have no projections of each to another, i.e. they are in independent inertial frames. Event $A_0$ is on hypotenuse of triangle and has projections on $^+$A and $^-$A, i.e. it is bound with them. Then two events $^+$A + $^-$A = $A_0$ in two inertial frames are bound with equality : $^+\beta^2$+ -$\beta^2$ = 1 ; $^+$ $\varphi$ + $^-\varphi$ =$\pi$/2, that is shown on Fig.2, where $A_0$, $^+$A, $^-$A - inertial frames of reference (or events), where relative centrifugal expansion +$\beta$ = cos $^+\varphi$ = $^+$A/$A_0$; relative centripetal compression (centre gravity) $^-\beta$ = cos $^-\varphi$= $^-$A/$A_0$. The directions of energy movement vectors in inertial frames $^+$A and $^-$A (Fig. 1,2) are mutually perpendicular.
On Fig.1 the model of rotating energy oscillator is shown, where:

$W_0$ - rotating energy of oscillator;
$^+W$- projection of vector $W_0$ in external inertial frame;
$^+\varphi$ - phase angle of centrifugal expansion; external inertial frame; energy movement from mass center;
$^-W$- projection of vector $W_0$ in internal inertial frame;
$^-\varphi$ - angle of centripetal compression (centre gravity); internal inertial frame; energy movement to mass center;
$^+A(^+r, ^+t)$ - external inertial frame;
$^-A(^-r, ^-t)$ - internal inertial frame;
$A_0(r_0, t_0)$ - counting boundary of inertial frames of rotating oscillator;
$\vec{F}$-force in inertial frames;
$t$ - time in inertial frames;
$r$ - coordinates ($x$,$y$,$z$) in inertial frames.

During observation from inertial frame (Fig.1) one can see in internal inertial frame projection of external inertial frame in form of rotating energy $^-W$. Compression of energy ($^-$ $W$) towards center from 0 till -$\infty$ with angle $^-\varphi$ leads to appearance of rotating current loop around center of gravity, or rotation in plane around electrode with simultaneous rotation of current loop in plane, that is oriented by angle 90 degrees relatively plane around electrode.
The direction of $^-W$ internal energy vector is in closed state. In external inertial frame $^-$ $W$ has conditionally

polarity N-S. Internal energy $^-W$ rotates with increasing of frequency from boundary $A_0$ to axis N-S, $W_0(\omega_1(\omega_2(\omega_3(...))))$. In external inertial frame we see centrifugal expansion of external energy $^+W$ with angle $^+\varphi$ from External energy $^+W$ rotates with frequency decrease from boundary $A_0 \rightarrow +\infty$.

$^+m$, $^-m$, $m_0$ - mass in external, internal inertial frames and on the boundary;

$^+V$, $^-V$, $c$ - velocity in external, internal inertial frames, light velocity;

$^+q$, $^-q$, $q_0$ - charge in external, internal inertial frames and on the boundary;

$^+E$, $^-E$, $E_0$ -field strength по**ля** in external, internal inertial frames and on the boundary;

$^+\omega$, $^-\omega$, $\omega_0$ - frequency of rotating energy in external, internal inertial frames and on the boundary;

$^+W = W_3$ - external energy of electric field;

$^-W = W_M$ - internal energy of magnetic field;

$^+E = \overline{E}$ - external strength of electric field;

$^-H = \overline{H}$ - internal strength magnetic field.

Table 1. Differential equations of EM field mechanisms in energy system

| External energy system | Internal energy system | Values in energy system |
|---|---|---|
| $^+div^+W = 4\pi^+F$<br>$^+div^-W = 0$<br>$$^+rot^+W = -\frac{1}{c}\cdot\frac{d^-W}{dt^+}$$<br>$$^+rot^-W = \frac{1}{c}\cdot\frac{d^-W}{dt^-} + \frac{1}{c}\cdot\frac{d^+W}{dt^+}$$<br>$$\frac{d^+F}{dt^+} + div\frac{d^-W}{dt^-} = 0$$ | $^-div^-W = 4\pi^-F$<br>$^-div^+W = 0$<br>$$^-rot^-W = -\frac{1}{c}\cdot\frac{d^+W}{dt^-}$$<br>$$^-rot^+W = \frac{1}{c}\cdot\frac{d^+W}{dt^+} + \frac{1}{c}\cdot\frac{d^-W}{dt^-}$$<br>$$\frac{d^-F}{dt^-} + {}^+div\frac{d^+W}{dt^+} = 0$$ | $divW_0 = 0 = \infty$<br>$rotW_0 = 0 = \infty$ |

6. THEORETICAL MODEL

Let's consider double-gap resonator formed by coaxial cylindrical shells, whose axis coincides with OX axis (Fig.3) [26-28]. In G area between shells electrostatic field with voltage 300 kV is applied. In G area we have particle cluster movement in cross magnetic and electric fields.

Beam of charged particles emitted by cathodes -4 is passed through system. Interaction between beam and field is localized in vicinity of input AB and output CD areas of set-up. Region BC is drift area, where beam is screened from external fields. If electron beam is interpreted as infinite sequence of RL branches each of them with adjoined area capacitance forms sequential RLC branch (C - equivalent capacitance comprising $C_1$ capacitance and capacitance between beam and boundaries of A and B holes), so we come to a problem about dissipation of energy, that was preliminary stored in $C_1$ capacitance in closed oscillatory circuit RLC. System as the whole is system with allocated (distributed) parameters. Working areas AB and CD with beam elements enclosed within their ranges are circuits with lumped constants. In this case initiated in these elements current can be considered to whole beam as current sources localized on these elements. Here we used scheme of direct oscillating movement of grouped electron clusters (bunches) on OX axis. If electron bunch to form into point on OX and to exclude drift tube from scheme, to keep anode as point in center of resonator (Fig.4), then scheme of oscillating movement of electrons is transformed into oscillating-rotating scheme. In experiments both schemes are used - oscillating and oscillating-rotating movements. Arrows show direction of closed current $J_H$ in RLC circuit with multi-mode modulation.

In resonant line particle cluster located in volume between anode and cathode at feed voltage $U$, initiates EM wave in frequency range $0 < v < eU/h$, where $h$ - Plank constant, $U \leq U_{anode\text{-}cathode}$. Modulation of low frequency oscillations by high frequency oscillations takes place on resonant frequencies $v$ in parametric and magnetic resonance conditions. Excitation of oscillations is probable when R and L change by leaps (grouping by any periodical law with period $T_n = n\ T_0/2$ or frequency $\omega_n = \omega_0/2n$ , where n-integer value, To - period of intrinsic oscillations of circuit). Most effective swinging takes place with n =1, when frequency of pumping equals to frequency of swapping $W_E$ into $W_M$ in system, where $W_E$, $W_M$ are energies electric and magnetic fields accordingly.

In magnetic waves mechanism of energetic change electron-ion cluster can have as phase angle $+\varphi$, as $-\varphi$,

that is possible if to use electrons and ions. Current loop consisted different polar particles is operated running magnetic field of magnetic waves, what we'll show in MVD experiments in this art.

As theoretical model let's consider two dimensional system presented on Fig.3. Field in such system has components $E_x$ , $E_y$, $H_z$. In AB gap has been applied electrostatic field $=\vec{E}_0$, and in CD gap has been applied electrostatic field $\vec{E}_1$ reverse direction towards$\vec{E}_0$ [26,27]. Field $\vec{E}_0$ accelerates electrons getting in first gap, and field $\vec{E}_1$ decelerates driving in second gap electrons. In plane $x$=0 in system has been lead electron cluster created current impulse duration $\tau$. Electrons, accelerating by field $\vec{E}_0$, reach drift space BC, on the exit from that begin decelerate by field $\overline{E}_1$ such as in point D longitudinal electron rate become equal zero, and they by action of field $\vec{E}$, approach accelerating move into reverse direction. If electron rate $\upsilon(x)$=0 at $x$=0, so $\vec{E}_1 = \vec{E}_0$, and electron movement from left on the right and from right on the left is symmetrical, differ only 1/2 period phase drift. Let's suppose in the consideration electron movement is one-dimensional. Interaction is described self-consistent system of Maxwell equations:

$$\begin{cases} divE = 4\pi\rho, \\ div\bar{H} = 0, \\ rotE = -\partial\bar{H} / \partial t, \\ rot\bar{H} = \bar{j} + \dfrac{1}{4\pi\cdot}\partial E / \partial t \end{cases} \qquad (1)$$

and relativistic equation of charged particle movement in flat EM wave field along axis x:

$$\frac{d}{dt}\frac{\upsilon}{\sqrt{1-\upsilon^2/c^2}} = \eta E_x, \qquad (2)$$

where p - charge density, $\bar{j}$ - current density, $\eta$ = $e$ / $m$ - electron charge to its mass ratio, which can as increase, as decrease. Solution of system (1), (2) we looking for by iteration method on assumption of approximation for preset current.

As initial null approximation let's accept current $I$ in given electrostatic field without accounting space charge. Let's also ignore non-uniformity effects related to presence current pulse border, and we'll suppose the current being direct in every cross-section ($x$ = const). In these propositions we have

$$I = 2I_0\sum_{n=-\infty}^{\infty}\frac{\sin(2n+1)\pi\tau/T}{(2n+1)\pi}\exp\left\{-2i\pi\frac{2n+1}{T}\left[t(x)-t+\frac{\tau}{2}\right]\right\} \equiv \sum_{n=-\infty}^{\infty}I_n(x)\exp\left(2i\pi\frac{2n+1}{T}t\right), \quad (3$$

where

$$T = 4t(B) + 2t_{BC}; \quad t(x) = \left[\left(\frac{x}{c}\right)^2 + \frac{x}{2\eta E_0}\right]^{1/2}; \quad t_{BC} = \frac{C-B}{\upsilon(B)}; \quad \upsilon(x) = \frac{t(x)}{\dfrac{x}{c}+\dfrac{c}{\eta E_0}}. \qquad (4)$$

For next approximation at first we'll find field induced by this current. We look for induced field in form of Fourier series by $t$:

$$E_x = \sum_{n=-\infty}^{\infty}E_{x_n}(x)\exp[2i\pi(2n+1)t/T] \qquad (5)$$

and similarly for $E_y$ and $H_z$ components.

For harmonics $\vec{E}_n$, $\vec{E}_n$ we'll have stationary Maxwell equations, from which by usual way we get Helmholtz equation for component $E_x$:

$$\Delta E_{x_n} + k^2 E_{x_n} = i\omega\ I_n(x) - \frac{1}{i\omega_n}\frac{\partial^2 I_n(x)}{\partial x^2}, \qquad (6)$$

where $\omega_n = 2\pi\frac{2n+1}{T}$.

For determination $E_{x_n}$ or $H_{x_n}$ we can use generalized projection method (JPM) [29,30].

Finding $E_{x_n}$ we determine full field $E_x(x,y,t)$ from (5) and put them in equation of motion, which will be as follows

$$\frac{d}{dt}\frac{\upsilon}{\sqrt{1-\upsilon^2/c^2}} = \eta(E_0 + E_x). \qquad (7)$$

Equation (7) is needed to solve numerically, for example by discretization method. Equation (7) is reo-nonlinear and it can describe nonlinear parametrical resonance of gripped cluster in vortex field.

Having solved equation (7), we are finding new current period $T_1$ and new full current $I_1(x,t)$, which is determined either from charge conservation equation $I_0dt_0 = I_1dt_1$ or from continuity equation $\partial\rho_1 / \partial t + \partial I_1 / \partial x = 0$, permitting to find $\rho_1$ at known $\upsilon$. Then determined full current is presented in Fourier series form on time-like type (3), but with period $T_1$, after that its harmonics are put into equation (6) and so on. It is necessary to note that solution of equation (6) in each iteration because of smoothing properties of Green function for Helmholtz equation will smooth the right part reducing role of high harmonics and increasing that of basic harmonic.

Experimental results show that with use of JPM [29,30] in equation solution one can effectively account for few tens of field harmonics in each iteration, i.e. find field with high precision. Beginning from the first iteration, current already depends on coordinate *y*, since accelerating field depends on it, but equation of motion remains one-dimensional. Current growth can be explained by electron acceleration in AB gap and deceleration in CD gap, where current is transformed into magnetic field of electron confinement. Accordingly we come to conclusion that in vortex oscillating electron cluster it is observed current growth and magnetic pumping with accumulation, and transformation into magnetic-electrical-inertial confinement, that is claimed in this art. «Magnetic» means current and magnetic field, «electrical» means imposed electrostatic field in volume $4\pi$, inertial rotation means rotation of particles around center of mass, what is absent in analogs.

7. DESIGN OF CURRENT GENERATOR, EXPERIMENTAL RESEARCH

From design point of view generator RO-2 (relativistic orthotron-2) presents itself vacuum volumes made from tube sections form stainless non-magnetic steel 2h18N10T. From right and left sides exploding cathodes are installed. After assembling the vacuum $2\cdot10^{-5}$ Torr in the volume was obtained. The view of generator is shown on the Fig.5 (photo). The main part of the generator frame is nozzle with diameter 150 mm and length 270 mm. To it's ends through flange vacuum seals of "konflat" type two nozzles of the same diameter with 110mm length are joined. The length of RO-2 is around 490 mm $\approx\lambda$.

The electrical scheme of measurements of parameters RO-2 in presented on Fig.6. High voltage on RO-2 drift tube was fed from generator of nanosecond pulses PVG-300 with parametrs: $U_0$= 300 kV; I≥1 kA; $t_{pulse}$=20 ns; f=1 Hz through one from two pass-through insulators. The electrical scheme of PVG-300 and measurement of pulse parameters of PVG are shown on Fig.7.

Generator of pulse voltages (PVG-300) is made according traditional Arkadiev-Marx scheme. It comprised 15 stages on the basis of capacitors ($U_0$= 10 kV; C=3300 pF). Each stage contains 2 consecutively connected capacitors. So, the capacitance of one stage is C=1650 pF. " The crash capacitance" of PVG is $C_{crash}$=110 pF. Accumulated energy in one pulse is P=5 J. The calculated current at pulse length $t_{pulse}$ =20 ns equals I =1,6 kA. To decrease thermal losses in charging and discharging resistors while PVG operation in frequency mode, they were made as inductances.

PVG is assembled in cylindrical tank from stainless steel with diameter ∅~550 mm and height h=400 mm (Fig.5). In tank the redundant pressure about 5atm is created. As insulating gas technical nitrogen is used. On the lower flange high voltage lead-ins of charging voltage and ignition pulse to the first controlled discharger PVG-R are located (Fig.7). Besides, there is output of plug-and socket with output voltage divider. On the opposite flange there is regulated

cutting discharger - $R_1$ (Fig.7) manometer for pressure measurement (photo Fig.5) in PVG volume and system of letting in and relieving of gas. The PVG's high voltage by pass-through insulator, which is located on PVG's frame side is submitted to drift tube of RO-2 system. The PVG design is seen on photo Fig.5. High voltage microsecond pulse to RO-2 system is given from pulse transformer (PT). Pulse transformer creates voltage pulse with the following parameters: U= 120 kV; $t_{pulse}$ =10 mcs; f=50 Hz.

PT is placed in iron tank with pass-through insulator, as insulator transformer oil is used. The core of PT is made from electro-technical steel with 0,08 mm width and it presents itself rectangle with 340 x 260 $mm^2$ size with internal 260x180 $mm^2$window. The core cross-section is 8x8 $cm^2$. The primary coil of PT consists from 16 turns, secondary - from 160 turns. PT is fastened inside the tank on dielectric support, which is hanged to dielectric cover of PT tank.

The control of time switching-on of PVG-300 and PT is done by generator of ignition pulses (IPG). The time switching-on of PVG-300 and PT may be shifted relatively each other. In our experiments PVG-300 was switched on at the high-voltage pulse front of PT.

For high-voltage pulses measurements voltage dividers (VD) made from low-inductive resistors are used. For measurements of pulses from PVG VD with division coefficient n = 1333 (Fig.7) was used. For measurement of PT pulse was used VD with n = 10 000.

For measurements of electron beam currents in the system specially designed magnetic-inductions sensors (Rogowsky coils) were used. Rogowsky coil (Fig.6) was wound from conductor on dielectric ring with section S=1 $cm^2$ and radius R=5cm. The number of turns of coil was defined from condition: $L/R \geq 10\ t_{pulse}$, wehre L - inductance of Rogowsky coil; R - active resistance of Rogowsky coil (was measured by resistor and capacitance bridge), $t_{pulse}$ - duration of measured pulse. Sensitivity of Rogowsky coil was determined experimentally by discharge of special generator in conductor on the axis of Rogowsky coil and was about 0,025 V/A. Besides, for electron beam current shunts made from low-inductance resistors and inserted in cathode circuit of RO-2 system were used.

8. MEASUREMENTS RESULTS, DISCUSSION

On the first stage of measurements it was necessary to determine parameters of PVG-300. For this purpose PVG's output was connected with grounded frame of PVG, i.e. short circuit mode was made and voltage pulse from VD was fed to oscillograph inlet. Oscillograms were shot on light-sensitive film (having in mind that film resolution is higher than that of digital camera's). According these oscillograms the following PVG parameters were determined:

$$L = \frac{T^2}{4\pi^2 C_{specific}}, \quad Z_s = \sqrt{\frac{L}{C_{specific}}},$$

where T - pulse oscillation period; $C_{shock}$ - "shock" capacitance. The intrinsic PVG capacitance was $L \approx 9 \cdot 10^{-8}$ Hn, and PVG wave resistance $Z_w$=30 Ohm. Pulse from PVG outlet was unipolar with duration ~40 ns, 20 ns was supposed.

On Fig.8 voltage pulse oscillograms from PVG outlet $VD_1$ (upper) and current pulse in PVG circuit and RO-2 system from Rogowsky coil (middle) are presented. The lower one - marks of high frequency generator f = 50 MHz, the whole scanning being 500 ns. Voltage pulse form in RO-2 system, in drift tube - sinusoid. The duration of one half-period of sinusoid is $t_{pulse}$=40 ns. The negative forerunner pulse on voltage oscillogram is explained by the fact that PT is connected to RO-2 drift tube via piece of coaxial line (the cable is seen on Fig 5), and this surge shows that initially the charging of line takes place. The amplitude of the first positive half-wave is $U_0 \approx 120$ kV. The current pulse (middle oscillogram on Fig.8) was measured Rogowsky coil and its value in the first half-wave was $I_0$=250/0,025 A=10 kA. So, one can see that at the initial stage of the process the current in RO-2 system does not exceed the limiting current value supplied by PVG and determined as $I_{lim}= U_0/Z_B= 3 \cdot 10^5/3 \cdot 10^1 A = 10^4$ A. Here $U_0$ - output voltage of PVG. But it is necessary to have in mind that calculated PVG current $I_0$ is 1,6 kA with duration 20 ns. Duration and pulse amplitudes are increasing and it is explained by acceleration in AB and electrons' braking in CD.

In the second half-wave current amplitude is growing till 20 kA and is determined by PT contribution and because of resonant accumulation in RO-2 system jointly with PVG. Observed oscillations on voltage and current pulses envelope are of much more higher frequencies and present themselves frequencies generated by RO-2 system itself.

The pulse duration of PVG outlet and probe was doubled comparing with calculated one (PVG - 20 ns). The resonance line is formed from PVG and RO-2 elements (Fig.9), resonance frequencies being 6÷10 MHz. Lower-frequency oscillations are modulated by higher-frequency ones. As a whole the scheme may be presented as it is shown on fig. 10. PVG is source of energy $\varepsilon$, which may be pulse, frequency or direct current and voltage one.

In resonance scheme the resonances on lower and higher frequencies are excited. Higher frequencies are excited in RO-2. Oscillations' excitation on lower and higher frequencies are closed in current loop, which in RO-2 is oriented in equatorial plane (oscillator vibrations) along OX axis (Fig.3). In current loop electrons and magnetic waves are involved. One can suppose that particles and waves in crossing fields present themselves integrated electromagnetic

mechanism of energy transformation. The transformations may be with phase angle -φ **ИЛИ** +φ. Energy movement in accordance with Pointing vector changes direction. In our case -φ Pointing vector direction does not change. If PVG current amplitude is $I_m$=2 kA, $U_m$=300 kV, τ=40 nc (Fig.10), then according Ohm law

$$U_m = I_m \sqrt{R_{eff}^2 + (\omega L_{eff} - \frac{1}{\omega C_{eff}})^2}. \quad (8)$$

Let us consider, **ЧТО** $R_{eff} \rightarrow 0$, then

$$U_m = I_m (\omega L_{eff} - \frac{1}{\omega C_{eff}}); \quad (9)$$

$$L_{eff} = \frac{1}{\omega}(\frac{U_m}{I_m} + \frac{1}{\omega C_{eff}}), \quad \text{where } \omega = \frac{2\pi}{T}, \quad T = 2\tau , \quad (10)$$

$$C_{eff} = \frac{q}{U} = \frac{I_m \tau}{U_m} = 2{,}6(6) \cdot 10^{-10}\ \mathrm{F} . \quad (11)$$

Putting (11) in (10), we get $L_{eff}$ = 2,5·10$^6$ *Hn*. Resonance frequency of current loop $f_{res} = \frac{1}{\sqrt{L_{eff} C_{eff}}} \approx 6{,}14 \cdot 10^6$ **Hz,** which is close to measured values on oscillograms (Fig.8).

Excitation of high-frequency oscillations on resonance frequencies of RO-2 system causes increasing of amplitudes and duration of main harmonic of resonance oscillations on low frequency close to calculated one 6,14·10$^6$ Hz. The amplitude of main harmonic grows: $I_{pe3} \geq$ 20 kA (40 ns) comparing with calculated one for PVG - 1,6 kA (20 ns). The main harmonic of voltage pulses from probes 7 (Fig.6) in gaps AB and CD by amplitude and duration are close to those of oscillogram (Fig.8, middle) - current in PVG circuit and in RO-2 system. Pulses from probes register electrodynamics in RO-2 volume in current loop circuit jointly with the pulses of main harmonic. Form of probe pulses may-be explained as quasi-permanent state of energy movement direction in closed system of RO-2 oscillations. Magnetic field and current in RO-2 system are closed and may be presented as magnetic wave with circular polarization, where Pointing vector does not change energy movement direction. In negative half-wave in moment of movement of electrons in CD gap the current transforms into magnetic field. This is in accordance of theoretical model and earlier published works [26-28], where we have shown from theoretical point of view the movement of particles in electromagnetic fields in parametric circuits of direct energy transformation. Thus current amplitude grows and magnetic field H strength around bunch increases. Similarly in AB during movement in inverse direction relatively the beginning of electron bunch movement. Then the movement direction changes the sign to opposite one but the energy movement does not change the direction. Thus the state of current and magnetic field pumping sustained with current amplitude growth from 1,6 kA (PVG) to 20 kA in RO-2. If one supposes that electrons on anode causes appearance of ions, physical picture of current does not change since positive ions maintain the current in current loop in the same direction.

Here we have considered the scheme of accumulation of current amplitude in oscillator movement of electrons in vacuum (Fig.3). To increase further the current growth let us consider electron-ion current in magnetic waves. In contrast to the first option let us consider the current loop rotating in oscillator-rotating mode along circumference (Fig.4). It permits to increase the power on cyclic frequency by 2π. Let us form current loop from electrons and ions in air thus permitting essentially increase power in continuous regime and this is absent in analogs.

9. EXPERIMENT AND MEASUREMENT OF MVD

Let us to describe formation of MVD in equatorial plane in air atmosphere in cross fields. Experimental measuring

was manufacture with scheme (Fig.11). In comparison with set-up Ro-2 current loop $I_1$ in MVD set-up rotates in running magnetic field and in field of permanent magnet -8. Current loop $I_1$ is formed in electrostatic field between anode and cathode with voltage 8 kV. Trajectory of current loop is formed by electrons, ions and magnetic waves with circular polarization. Electromagnetic oscillations between magnetic waves and air particles are organized primary on resonant frequencies of air particles with modulation in travelling magnetic field at cyclic frequency about 200 Hz. Calculating frequencies RLC circuit can be in range 6÷10 MHz. Electrical scheme of resonant RLC circuit presented on Fig.11 separates from scheme Ro-2 (Fig. 10) by absence of pulse power supply. Instead of PVG with 300 kV there is direct current source -1 with 8 kV, 2 kW on Fig. 11. $L_{eff}$ of RLC circuit -3 is winding of solenoid magnet twisted on insulated water cooling bobbin. Winding of RLC circuit is putted on non-magnetic reactor chamber and placed into volume fabricated from non-magnetic steel. In experiments was used removable chambers with different diameters (0= 24÷160 mm).

Magnetic field in windings is created by current from current loop $I_1$ (successive connection with current loop) and from autonomous power supply -8 direct current $I_2$ (Fig.11). Two windings: one - $L_{eff}$ of RLC circuit -3, another one - winding of static field for MVD confinement in the center of reactor. Oscillogramms was read by digital cameras on oscillograph -7.

All electromagnetic transformations with electrons and ions of current loop are manufactured in reactor -4. Static magnetic and electric and electromagnetic fields are spread between anode and cathode in reactor volume. In working process heated anode and cathode combined air covered in volume are source of electron and ions. In short time connection of anode-cathode space resonant electromagnetic auto oscillations are induced similarly to RO-2 according to theoretical model. In RO-2 current loop is disposed along OX axis in gaps AB, BC, CD. In the scheme interaction area is anode-cathode space. During gyration on and against time hand gap's number is increased accordingly cyclic frequency of current loop rotation in 2n volume. Electron movement from cathode to anode, then ion movement from anode to cathode are current and trajectory of waves and particles interactions. Electrons accelerated between cathode and anode in electrostatic field and in wave's field and ionized particles form high frequency current loop. Photo of current loop is shown on Fig. 12 in reactor with diameter 22 mm in magnetic field 0.8 tesla at voltage 8 kV (photo by digital camera), where we observe five parallel resonant trajectories of "current growth". Current in current loop and magnetic winding of RLC circuit create travelling magnetic waves on frequency 200 Hz. Rotation frequency increases with increasing of magnetic field strength H.

On photo Fig.13 is shown multi-mode magnetic wave package, and in ionized trajectories we can see six parallel rotating magnetic waves. It can be explained that they are in resonance. Analogues character of parallel rotating waves we can see on the photo of current loop (Fig.12), where resonant excitations are observed at high frequencies as parallel, as on the photo Fig.13. In RO-2 set-up resonant excitations are observed with low amplitudes on high frequencies and more high amplitudes on low frequencies 6÷10 MHz. The same difference of resonant excitations can be explained by different numbers of φ angle depended on feed voltage in RO-2 - 300 kV, and in MVD set-up - 8 kV. Angle ±φ is operated (is settled) by init -2 (Fig.11).

On oscillogramm Fig. 14 is shown decreasing sinusoid in RLC circuit of current loop looked like on sinusoid of RLC circuit of RO-2. Horizontal scanning is 0.1 ms/sm, vertical scanning - 0.5 V/sm. Amplitude measuring of current was made with $R_{sh}$ =0.3 Ω (see scheme Fig. 11). Current amplitude reaches 1.7 kA in positive part of oscillation period. Steepness of pulse first front is about 2 mcs, duration in oscillation period basis is T=0.14 ms, accordingly oscillation frequency $f_r$=7 kHz. $L_{eff}$ and $C_{eff}$ of RLC circuit are $18{,}5\cdot10^{-6}$ Hn and $26{,}8\cdot10^{-6}$ F correspondingly. Diminish sinusoid at full duration of oscillations repeat in 0.5 mcs. Evolved power $P_{ev}$ to consumed power on load $R_1$ ratio is 390 times (resonant energy compression).

Calculating parameters of sinusoid pulses agree with practically obtained data during measurement. On oscillogramm Fig.14 is depicted by dotted line size of initial electrostatic voltage 8 kV and size 4 kV in working stage. $C_{eff}$ 4 kV is kept continuously at continuous reinforcement and confinement of current 1.75 kA on frequency about 7 kHz with pulse modulation on cyclic frequency 200 Hz. Evolved power in volume of current loop $P_{ev}$=0.9 MW is confined any long time with losses accounting.

So, in theoretical model, in RO-2 and MVD set-ups we are shown resonant generation, reinforcement of current in 390 times and magneto-electro-inertial confinement any long time with power 0.9 MW at consumption from power supply about 2 kW. Force current and magnetic field can be used in energetics, metallurgy, mining production in production and separation useful elements, nano-powders and other applications [1].

(Note: Warning - if you like to repeat the MVD experiments, it is necessary to provide for protection of force electric circuits! Highly explosively!)

10. THE EXAMPLES OF MAGNETIC VORTEX FIELDS OF MVD

*The main device - generator of ultra high-frequency EM field* of broad spectrum is magnetic V dipole (MVD), where electron-ion current loop from ionized raw material and magnetic waves are formed. The interaction frequency of EM field with substance ($10^5$-$10^{12}$ Hz) is defined by resonance frequencies of raw material. The rotation of magnetic

dipole happens on cyclic frequency RLC circuit and raw material. Rotation of magnetic dipole carries out on cyclic frequency $10^1$-$10^6$ Hz by running magnetic field. The energy transfer to raw material particles occurs by inter-induction of joint magnetic moment of raw material particle and travelling magnetic waves.

The process of destruction of crystal structure of minerals by proposed method is based on interaction of EM field with substance. The process is complex one and includes several phenomena. Let us consider their sequence in the process.

The working chamber in form of empty tube from stainless steel is loaded by raw material (preliminary cleaned and dried). In the chamber electrostatic field between two electrodes is created. One of electrodes (cathode) is tube serving as chamber walls as well; the second (anode) is long tube axis. Electrostatic field has central symmetrical or axis symmetrical configuration of field strength **E** distribution.

Electrostatic field **E** interacts with material in the volume of chamber causing its polarization and ionization. Since the material $SiO_2$ is dielectric, initially with field on material is polarized and heated. The first operation is polarization and heating till 50÷500°C in high voltage 1÷100 kV electric field. At sufficient potential difference equal to breakdown voltage of dielectric, breakdown occurs - discharge in substance, in gases similar to arc one. As the energy maximum of radial field is nearer to center of chamber, in the center as in discharge channel ionized state of substance electron-ion current loop is formed. In this loop there are two types of charged particles: light is negative charged electrons and more heavy is ions, which may be both positive and negative according their trajectories (Fig. 12,13).

Temperatures and radiation frequencies of electrons and ions radiations differ considerably: electron temperature and radiation frequencies higher than ion ones. Visually two opposite anti-nodes in electrostatic field are observed, where directed fluxes of opposite charged particles with different colors are formed: the flux to anode or positive pole, attracting negatively charged particles, has green-blue-violet glow; the flux to cathode or negative pole, attracting positively charged particles, has orange-red glow. The color is explained by characteristic resonant frequencies of charged electrons and ions: electrons as much lighter particles have higher characteristic frequencies including visible part of EM spectrum. The points are spots of unification of electron-ion current presenting current loop. (Fig. 12).

Current loop can be consisted from solid particles (electrons and ions) and waves. It's necessary to note that before formation of visible radiation, radiation on sound frequencies is formed.

In the process electric currents in two opposite directions - electron and ion ones or charged particles and magnetic waves consisted - are formed, and their values may reach several kA. The process of generation of current loop is excited during establishing the regimes of orientation of vectors of magnetic and electric fields in zone of MVD. The fluxes of ions and electrons form oscillation circuit with distributed parameters with the spectrum of intrinsic frequencies and resonant ones caused by the frequencies of raw material particles with multimode modulation of magnetic waves. Multimode modulation and magnetic pumping are absent in analogs. Orientation normalized current direction of electrons from cathode to anode as regime of magnetic energy compression into mass center is also absent in analogs. Positive ions and negative electrons form two branches of loop of closed current of various frequency ranges. High-frequency branch of current loop formed by electrons and raw material particles is directed from anode in center of mass (laboratory system) to border - cathode and has blue-violet glow. Low-frequency branch of current loop formed by positive ions and raw material particles is directed from boundary to center of mass and has orange-red glow. These observations are confirming right tuning and formation of MVD dipole. In center of mass can be placed cathode or anode. And by this it is expected compression of energy into center of mass with angle $-\varphi$ or expansion of energy from center of mass with angle $+\varphi$ correspondingly (Fig.1), what is absent in analogs.

Around moving charged particles the magnetic field is formed wrapping moving charged particles with magnetic sheet. It seems so in whole process, but it is particle and running field separately. Magnetic field in current loop is alternate with frequency modulation and energy movement in one direction. The travelling magnetic field and current loop are in EM interaction.

The current loop is rotating with cyclic frequency as results of interaction of solenoid magnetic field and magnetic field of current loop. Solenoid field is quasi-stationary as it is fed by direct current.

The formation of MVD dipole is regulated by magnetic field rotating around the particles of irradiated material. Magnetic energy in current form is fed from electric power supplies. (Fig. 15). Depending on properties of material's particles, their magnetic and electric conductivity, the scheme of interaction with material is chosen. If it's dielectric as in case with $SiO_2$, irradiation device consists from two cascades. In the first cascade polarization and heating is done, in the second one -heating and reduction of silicon with hydrogen or titanium with solid reductants. In the first cascade power supply voltage is chosen in range 1÷100 kV and $SiO_2$ is heated up to 50÷500°C in hydrogen atmosphere, polarized and directed to second cascade. In the second cascade at 50÷300 V with current up to several thousand A is resonantly heated in MVD zone till 700÷1200°C in hydrogen atmosphere (dry powder) till total reduction of silicon or other elements. The scheme of reduction of $FeTiO_3$ is the same: two cascades with polarization and preheating in first one and heating in the second cascade and as reductants solid carbon compounds are used. The reduction is done till formation of metal iron $\alpha$-Fe and $TiO_2$. The gaseous reductants (hydrogen and CO) also may be used. Analog regimes aren't in analogs.

On Fig.16,17,18 rotating magnetic field is shown. It is produced by summing of three sinusoidal fields directed at angle 120° relatively each other and shifted by phase to one third of period (120°): on Fig.16 disposition of coils XA, YB, ZC, making rotating field; on Fig. 17 time dependence of $H_A$, $H_B$, $H_C$ ; on Fig.18 vector summing of fields in moments t=0, t=T/3, t=2T/3, when fields $H_A$, $H_B$, He are equal to zero. Resulting vectors H is constant and by 1/3 of period rotates to 1/3 of circle. We have here three coils XA, YB, ZC, disposed relatively each other at angle 120°. Through each of these coils passes one of currents of system composing three-phase current. In these coils magnetic fields are formed and their directions are shown on Fig.16 with arrows $H_A$, $H_B$, $H_C$. The strengths of fields has sinusoidal time dependence as constituent currents. So, magnetic field in space between coils is superposition of three alternate magnetic fields, which from one side are directed at angle 120° to each other and from the other are shifted by phase to 120°. The resulting field strength is vector (geometric) sum **H** of three constituent fields at given time moment $\mathbf{H} = \mathbf{H_A}+\mathbf{H_B}+\mathbf{H_C}$. The resulting strength **H** uniformly rotates carrying along electron-ion current loop making one revolution during one period of alternate sinusoidal current. If traveling magnetic field is enough strongly bound through induction electron-ion current loop, control and rotation of current loop is achieved. Current loop is formed by energy of magnetic rotating waves closed by ring trajectory between anode and cathode. Magnetic waves present traveling magnetic field, which rotates current loop if is placed in closed magnetic field of solenoid oriented perpendicular to current and magnetic field of current loop. It is possible to use traveling magnetic field formed between current of electron-ion current loop, magnetic field and current of solenoid fed by direct current and this option of MVD creation is shown on Fig.19.

The winding of solenoid 2 creates permanent magnetic field with field strength 0,1÷1T. Orientation of currents and magnetic fields is operation of MVD regime formation. These regimes aren't in analogues. The direction of electron flux is from electrode 1 to electrode 6, the direction ion flux is counter to that of electron flux: from electrode 6 to electrode 1. The fluxes are closed in current loop having form close to ellipsoid, geoid or disc. Here: $I_{ion}$ - ion current, $I_e$ - electron current, $I_n$ - current of current loop, $I_s$ - current of solenoid, $H_n$ - magnetic field of current loop, $H_s$ - magnetic field of solenoid, $H_{ns}$ - traveling magnetic field of current loop. The resulting field $H_{ns}$ uniformly rotates together with current loop. On account of inter-induction between current loop and magnetic field of solenoid originates traveling magnetic field of current loop which creates anti-clockwise rotation of current loop or clock-wise one depending on polarity of power supplied voltage of solenoid winding. Rotation velocity is proportional to magnetic field strength of solenoid.

The principal electric block-scheme of MVD power supply is shown on Fig.15. It may be divided relatively to several accelerating grades: 1 grade - $R_1L_1C_1$, ..., n-th grade - $R_nL_nC_n$, - external to dipole circuits (external inertial frame). In each grade there are active resistances R of load, inductance L, being accumulators of magnetic energy, and capacitor C - accumulator of electric energy. MVD is internal oscillation circuit (internal inertial frame), inductively bound with cluster of particles (material). MW oscillations are generated in MVD circuit with its RLC parameters, which are inductively coupled with $L_s$ - inductance of solenoid (Fig. 15) creating permanent field of solenoid. Acceleration grades increase magnetic or electric energy and set relation between electric and magnetic fields in EM waves. This relation is set by voltage in acceleration grades, where is closed one-direction current I single direction. The RLC grades are connected consequently to provide MW energy formation with large currents and its continuous accumulation in grades without interruptions, without pause for accumulating of energy. There is energy transfer via MVD from external inertial frame into internal inertial frame. This energy movement by varying angle $+\varphi \div -\varphi$ permits to accumulate magnetic or electric energy and it's feature of invention.

On Fig.8 oscillogram of closed current and magnetic field is shown. As it is seen, time growth of current and magnetic field in external circuit of MVD is - 1 mcsec. This process initiates MVD formation. Attenuating oscillations of back current I' on lower time axis are repeated in every cycle on cyclic frequency. At warming-up of cathode surface operation of scheme is stabilized since electron emission increases in MVD volume. Increase of current I and magnetic field H is fast process (energy pumping),whereas magnetic field confinement is slow one - 80 msec. Attenuation of pumping energy happens in parallel to beginning of cycle next in time. These regimes aren't in analogs. The existence of MVD periodically resumes by electrostatic energy accumulated in power supply unit and in capacitor of each grade accumulating grade without interruptions. Time axes t and t', electric, magnetic energies are closed on circle and have no temporal time meaning in inertial frames from $-\infty$ till $+\infty$ and it's newness and feature of proposed invention. It is reached by working regime at energy ratio in oscillating circuit $E = CU^2/2$ and wave energy E = nhv.

The formation of MVD is made in accordance with relation **E<<H** or **H<<E** in several RLC oscillation circuits **(Fig.15).** The relation **H<<E is** achieved at high voltages of power supply in autonomous cascade of MVD. These relations are chosen depending on magnetic and electric conductivities of processed material. If it is dielectric $SiO_2$, the voltage is high up to 1÷100 kV. The voltage is chosen in one grade as well as common power supply voltage of MVD. Optimally there are two or more grades in scheme (Fig.15). RLC oscillation circuits of grades provide operation of MVD on frequencies $10^6 \div 10^{12}$ Hz. In current loop frequency of electron part can achieve $10^{12}$ Hz and more and that of ion one - $10^{6-7}$ Hz. Current pulses of power supply in grades are produced by method described in the section 11. All indicated here frequencies, relations of |**E**| and |**H**| fields in circuits are novelties and are features of proposed invention are set by directions of field vectors and parameters of voltage and current.

11. ON PRODUCTION OF CURRENT PULSES OF GIVEN SHAPE ON INDUCTANCE OF OSCILLATION CIRCUIT DURING ITS SHORTENING TO DIODE OF THE MVD CIRCUIT FORMATION

Let's consider processes in electric scheme (Fig.21) and describe the method of current pulses formation of arbitrary shape by in-turn connection of charged capacitors (Fig.22) in circuit with shortened inductance accounting phase angle $\varphi$. Representing here computations are used for RLC choice.

At corresponding charge polarity of capacitor C, inductance L and capacitor C are elements of regular oscillation circuit till the current $I_L$ reaches maximal value (Fig.21). From the moment of reaching maximal discharge current $I_C$, in circuit operation participates diode with internal direct resistance R (current through diode $I_R$). The processes in circuit are described by Kirchhoff equations (we describe current taking into account that for voltage it's correspondingly).

$$\left.\begin{aligned} &I_L = I_R + I_C \\ &L\frac{d^2 I_L}{dt^2} + \frac{I_C}{C} = 0 \\ &L\frac{dI_L}{dt} + RI_R = 0 \end{aligned}\right\} \qquad (12)$$

Initial conditions for moment t=0 are the following:

$$I_R = 0, \quad I_C = I_L = I_{max} = I_0. \qquad (13)$$

The solutions of system (12) will be non-periodical (in form of hyperbolic functions), if

$$D = \frac{1}{4R^2C^2} - \frac{1}{LC} > 0$$

and (sinusoidal with attenuation) if $D<0$.

Further the case of non-periodical solution is considered

$$\frac{L}{C} > 4R^2, \quad \text{or} \quad \frac{1}{2}\frac{\rho_0}{R} > 1, \qquad (14)$$

where $\rho_0 = \sqrt{\frac{L}{C}}$ - wave resistance of circuit, and the currents are

$$\left.\begin{aligned} &I_R = 2I_0\frac{\delta}{\omega}\exp(-\delta t)\text{sh}\,\omega t \\ &I_C = -I_0\frac{\omega_0}{\omega}\exp(-\delta t)\text{sh}(\omega t - \varphi) \\ &I_L = I_0\frac{\omega_0}{\omega}\exp(-\delta t)\text{sh}(\omega t + \varphi) \end{aligned}\right\}; \qquad (15)$$

here $\omega_0 = \frac{1}{\sqrt{LC}}$ - intrinsic frequency of oscillation circuit, $\delta = \frac{1}{2RC}$ - attenuation constant;

$$\omega = \left|\sqrt{\frac{1}{4R^2C^2} - \frac{1}{LC}}\right| = \left|\sqrt{\delta^2 - \omega_0^2}\right|,$$

$$\operatorname{sh}\varphi = \frac{\omega}{\omega_0}, \quad \operatorname{ch}\varphi = \frac{\delta}{\omega_0}.$$

In condition of large non-periodicity

$$\frac{\rho_0}{R} >> 1; \quad \frac{\delta}{\omega_0} >> 1. \tag{16}$$

The solutions (15) approximately are written as

$$\left.\begin{aligned} I_R &= 2I_0 \exp(-\delta t)\operatorname{sh}\omega t \\ I_C &= -2I_0 \frac{R}{\rho_0}\exp(-\delta t)\operatorname{sh}(\omega t - \varphi) \\ I_L &= 2I_0 \frac{R}{\rho_0}\exp(-\delta t)\operatorname{sh}(\omega t + \varphi) \end{aligned}\right\}. \tag{17}$$

For small ωt (small ωt means that approximate equality takes place

$$\operatorname{sh}(\omega t - \varphi) = -\frac{1}{2}\exp(\varphi - \omega t)\ )$$

we have

$$\left.\begin{aligned} I_R &= -2I_0 \exp(-\delta t)\operatorname{sh}\omega t \\ I_C &= I_0 \exp\left[-(\delta + \omega)t\right] \\ I_L &= I_0 \exp(\omega - \delta)t \approx I_0 \exp(-\frac{R}{L}t) \end{aligned}\right\}. \tag{18}$$

where it was taken into account $\omega - \delta \approx \frac{\omega^2 - \delta^2}{2\delta} = -\frac{R}{L}$.

For large ωt

$$\left.\begin{aligned} &I_R = I_0 \exp(\omega-\delta)t \\ &|I_C| = I_0\left(\frac{R}{\rho_0}\right)^2 \exp(\omega-\delta)t \ll I_R \\ &I_L = I_R = I_0 \exp(-\frac{R}{L}t) \end{aligned}\right\} \quad (19)$$

According expressions (18) and (19) the capacitance practically is not recharged (fast drop of current $I_C$ according $I_0$ exp [-(ω)+δ)t)]; during the whole transition process approximately one can take

$$I_L = I_0 \exp(-\frac{R}{L}t). \quad (20)$$

This approximation is the more valid, the better inequality (16) is. The temporal change of currents $I_R$, $I_C$, $I_L$ experimentally confirmed by shortening of solenoid with current 100 kA and energy of accumulation battery $10^4$ J is shown on Fig.23.

For getting the high values of dE/dt, di/dt (for irradiation of dielectrics) by in-turn discharge and disconnecting $C_{k-1}$ with simultaneous connection to circuit the charged capacitances $C_k$ (Fig.22) it's possible to reach current pulse formation with front of arbitrary shape Φ(t) (Fig.24).

It's necessary that the current maximum during full discharge of capacitor $C_k$ at $t_k$ exactly equals to $\Phi(t_k)$. The originated by this problem of current oscillations in oscillation circuit with initial conditions

$$t=0,\ I_L = I_{10},\ q_0 = CU_0$$

(qo, Uo- initial charge and voltage of capacitor) has the following solution

$$\left.\begin{aligned} &I_2 = I_{20}\cos(\omega_0 t-\varphi) \\ &I_{20} = \sqrt{(q_0\omega_0)^2 + I_{10}^2} = \frac{I_{10}}{\cos\varphi} \\ &\mathrm{tg}\,\varphi = \frac{q_0\omega_0}{I_0} = \frac{U_0}{\rho_0 I_{10}} \end{aligned}\right\}. \quad (21)$$

The expressions for current and voltage on capacitor $C_k$ after disconnecting totally discharged capacitor are described in the form of recurrent relations

$$\left.\begin{aligned} &I_k = I_{k0}\cos[\omega_0 t - \sum_{i=1}^{k}\varphi_i], \quad (\varphi_1 = \frac{\pi}{2}) \\ &I_{k0} = \frac{I_{k-1,0}}{\cos\varphi_k},\ \varphi_k = \omega_0(t_k - t_{k-1}),\ U_{k0} = \rho_0 I_{k-1,0}\,\mathrm{tg}\,\varphi_k \end{aligned}\right\}. \quad (22)$$

Angle $\Phi_k$ is found graphically by $t_k$ -temporal coordinate of intersection of functions Φ(t) and $I_{k-1,0}/\mathrm{COS}\omega_0(t-t_{k-1})$, that is also novelty and is feature of invention (the curve is shown by dashed line). Ordinate on intersection is $I_{k0}$. And diode D is providing reliability of circuit operation during delay in disconnecting and connecting of capacitors (Fig.21).

Analogously it's possible to propose the formation of flat top of pulse. For this it's necessary after reaching the next maximal discharge current to shorten inductance to diode for a time defined by given current drop and then the

charged capacitor is connected (discharged capacitor is not connected at this moment). The following current maximum should be equal to the former one (Fig.25).

If all connected capacitors are the same, according (20), (21) for integrals of current growth is right

$$\left.\begin{array}{l} I_k = I_0 \cos[\omega_0 (t - t_{k-1}) - \varepsilon] \\ U_{k0} = U_{20} = \rho_0 I_0 \sqrt{1 - \exp(-2\frac{R}{L} t_0)}, \quad \operatorname{tg}\varepsilon = \frac{\omega_0 q_{20}}{\overline{I}_0} \end{array}\right\}, \quad (23)$$

Where $U_{20}$ - voltage on connected capacitor.

The droop range $(t_k - t_{k-1}) = t_0$ is easy to determine by given value of deviation of current from its maximum

$$\gamma = \frac{I_0 - \overline{I}_0}{I_0} = 1 - \exp(-\frac{R}{L} t_0),$$

where

$$t_0 = -\frac{L}{R} \ln(1 - \gamma). \quad (24)$$

The duration of "plateau" T is determined by number of connected elements n:

$$T = n\,(\Delta t + t_0) \quad (25)$$

$$\Delta t = t_{k0} - t_{k-1}\,.$$

Apparently it's possible to get flat top of pulse without disconnection of discharged capacitors. Supposing that charge of connected capacitors instantly is redistributed between other capacitors, it's easy to write expressions for currents and initial voltages of capacitors:

$$\left.\begin{array}{l} U_{k0} = \rho_0 \sqrt{k} I_0 \sqrt{1 - \exp(-2\frac{R}{L} t_0)} \\ I_k = I_0 \cos\left[\omega_k (t - t_{k-1}) - \varepsilon\right] \\ \operatorname{tg}\varepsilon = \dfrac{\sqrt{1 - \exp(-2\frac{R}{L} t_0)}}{\exp(-\frac{R}{L} t_0)}, \quad \omega_k = \dfrac{\omega_0}{\sqrt{k}} \end{array}\right\}. \quad (26)$$

The duration of "plateau" and number of connected elements n are bound by:

$$T = n t_0 + \frac{\varepsilon}{\omega_0} \sum_{k=1}^{n-1} \sqrt{k}. \quad (27)$$

The change of angle φ is chosen graphically for relations dE/dt, di/dt, which permit to establish correlation of electric and magnetic powers. It permits to work with dielectrics (burden) or with magnetic-conducting or electric-conducting burdens in MVD autonomous cascades. Inductances in RLC circuits can reach values >>100 mHn. In the second cascade MVD is working with magnetic energy by relation **E**<<**H**. EM waves by this relation are induced with high di/dt. This interaction is performed with light speed on resonant frequency of material's particles and electrons and ions in current loop. This effect permits to get high speeds of dP/dt of consumed power and di/dt. This results to lowering of total consumed energy and growth of kinetics of oxidation-reduction reactions. This feature is absent in prior art and it's new feature of proposed invention. Separate operation of electric and magnetic constituents of EM waves by this means is realized for the first time. This is achieved in closed magnetic and electric, EM waves of current loop. Closed magnetic fields and currents and their inter-induction with material in current loop are new and present themselves essentially new means of generation of MW fields.

On Fig.19 the block-scheme of formation of MVD dipole is shown with magnetic-inertial confinement of material's particles, where one may see the directions of vectors of magnetic waves in closed state in current loop -4. Electron $I_e$ and ion $I_{ion}$ currents are also closed in current loop and rotate in circle of ellipsoid type between electrodes -3, -5, thus being newness and feature of invention. The diameter of electrodes defines the size of reactor (diameter).

Inter-induction between magnetic field of solenoid and magnetic and electric fields of current loop creates travelling magnetic field, which rotates the loop with cyclic frequency $10^1 \div 10^6$ Hz along closed circle. The currents and travelling magnetic fields in MVD (Fig.19 and Fig.15) are formed in directions $\overset{\circ}{I}_1(L_n) \perp \overset{\circ}{H}_1(L_n)$ и $\overset{\circ}{I}_2(L_S) \perp \overset{\circ}{H}_2(L_S)$ where $\overset{\circ}{I}_1, \overset{\circ}{H}_1$ - closed current and magnetic field in B RLC circuit of n-th grade, $\overset{\circ}{I}_2, \overset{\circ}{H}_2$ - closed current and magnetic field of solenoid. The frequencies of RLC circuits in grades are chosen in accordance with relation $f_1(R_1L_1C_1) << f_n(R_nL_nC_n)$. Orientations of fields and currents in range from perpendicular to parallel (angle φ, see "Model of rotating energy oscillator") is performed in accordance with relations:

$$W_E = W_M; \quad |\vec{E}| \gg |\vec{H}|; \quad \frac{dW_E}{dt} \gg \frac{dW_M}{dt}; \tag{28}$$

$$W_M = W_E; \quad |\vec{H}| \gg |\vec{E}|; \quad \frac{dW_M}{dt} \gg \frac{dW_E}{dt}, \tag{29}$$

where $W_E$ - energy of electric field, $W_M$- energy of magnetic field, $|\vec{E}|$ - strength of electric field, $|\vec{H}|$ - strength of magnetic field. By perpendicular and parallel orientations of fields and currents it is possible to vary ratio of electric mad magnetic constituents of EM field thus being newness and essential feature of proposed invention. Multi-cascade structure, sequence and autonomy of implementation of operations of polarization, heating, increasing of temperature gives opportunity to perform purposefully EM interactions with dielectrics and superconductors, thus being regimes, newness and feature of proposed invention. These regimes are unified by several newness features justified and obtained in practice in proposed invention.

12. THE EXAMPLES OF PHYSICAL MECHANISMS OF CURRENT LOOP FORMATION

Let us consider two cases of disposition of current loop in running magnetic field.

1) Equatorial travelling magnetic field is formed in air or in irradiated material in form of current loop, which is rotating with cyclic frequency as results of interaction on magnetic field of solenoid and that of current loop. The field of solenoid is permanent because its feeding current is direct one. (Fig.26).
**E**<<**H** in current loop.
**$I_1$** - closed current of one direction in current loop presenting itself torus formed by EM wave.
**$I_2$** - closed current in the form of Ampere-twists or permanent closed magnetic field.
**$I_1$** - the current of electrons and ions on resonant cyclic frequency of current loop modulated by resonant frequencies of electrons and ions from material and air particles. $I_1$ presents itself oscillation RLC circuits with power supply in opposite points of anode (A) and cathode (C) connected in parallel, where frequency is changed in accordance with modulation. Conditionally anode is located in the center of mass in laboratory coordinate system. Cathode also may

be in the center of mass (it is chosen depending on type of irradiated material). In this case electron temperature will be either in the center or on the outside, i.e. temperature gradient is directed from center of mass. If temperature gradient direction is chosen towards center of mass, (that depends on angle φ) accumulation of energy takes place and correspondingly destruction and phase transformations of crystal structure.

As a result of induction interaction of closed currents $\mathbf{I_1}$ and $\mathbf{I_2}$ the strengths of magnetic fields $\mathbf{H_{i1}}$ and $\mathbf{H_{i2}}$ are summed on cyclic frequency of travelling magnetic field $\mathbf{F_{tf}}$. In accordance with vectors shown on Fig.26 the movement of magnetic field energy is directed towards center of mass. Magnetic field strength $\mathbf{H_{i1}}$ in each cycle of cyclic frequency of current $\mathbf{I_2}$ is increasing. Between particle and magnetic field of current loop $\mathbf{I_1}$ closed EM interaction is established, where magnetic field energy is moving in accordance Pointing vector **P**. The movement of magnetic energy in current loop is closed on circle of current $\mathbf{I_1}$ and is parallel to current $\mathbf{h_2}$. The current $\mathbf{I_2}$ is moving on the boundary of cathode conductivity. On conductivity boundary there are turns with currents of solenoid, which field is summed as mean geometric sum of $\mathbf{F_{i1}}$, $\mathbf{F_{i2}}$ of magnetic field of solenoid $\mathbf{H_{i2}}$ and that of current loop $\mathbf{H_{i1}}$. $\mathbf{H_{i2}}$ and $\mathbf{H_{i1}}$ are parallel and closed in volume of anode-cathode space. 2) Equatorial travelling magnetic field may be obtained also by coils with iron cores (Fig. 16) at alternate three-phase current. It is also possible to get travelling magnetic field in magnetic field of solenoid as we described earlier for case 1.

**E**<<**H** in current loop.

**I** is closed and increasing on cyclic frequency.

Three solenoids, fed by alternate three-phase current with 50 Hz frequency located around imaginary cylinder over 120°, create travelling magnetic field rotating current loop around anode and cathode along cylinder wall (Fig.27). The outer surface of cylinder is formed by set of vertical trajectories of ions, internal surface is formed by that of electrons. On anode and cathode these trajectories are joining. On cathode also joining of ion and electron constituents happens. Energy, as in case shown on Fig.26, rotates around center of mass and Pointing vector is closed around it. So modulation by resonant frequencies of material's particle takes place. Magnetic and electric fields, Pointing vector are closed and rotating around center of mass magnetic-electrical-inertial confinement. The regimes of closed magnetic and electric fields and Pointing vector and their rotation around center of mass are new ones and present themselves as essential, distinctive features of invention

13. THE EXAMPLES OF PRACTICAL IMPLEMENTATION OF A METHOD AND APPARATUS MVD FOR STRUCTURAL TRANSFORMATIONS OF SILICON AND TITANIUM CONTAINING RAW MATERIALS.

We present here some data on implementation of a method and apparatus obtained at experimental set-ups as well as calculations, regime measurements and analyses of products obtained.

For silicon production in apparatus by a method of excitation of EM interactions it's possible to use several options of silicon reduction by obtaining fine-dispersion silicon powder (grain size less than 1mcm) in accordance with reaction:

$$SiO_2 + H_2\uparrow \underset{Ar\uparrow}{\overset{\text{radiation-heating}}{=}} SiO + H_2O\uparrow - Q.$$

The first operation is: preparation of fine-dispersion (about 1÷1100 mcm) powder from quartzite $SiO_2$ in the presence of NaOH catalyst. In MVD field mixture $SiO_2$ and NaOH is heated till temperature 600÷1200°C. Is is obtained cake-block, then it is dissolved, separated, washed, cleaned from impurities, dried and obtained powder - fine-dispersion silica.

The second operation is: obtained powder silica in hydrogen medium is placed into current loop, which is generated in the first cascade of device. Working mixture in hydrogen medium with argon addition is irradiated in MVD field in the first cascade in regime with high voltage, making polarization and heating raw material till 50÷500°C.

The third operation is: from the first cascade heated material is fed to second cascade of device. In the second cascade in heavy current regime with voltage 50÷300 V resonant heating till 600÷1200°C is continued and final reduction of silicon happens. Similarly it's made operation with titanium containing material and obtained determination on phases (in common mass).

The fourth operation is: reduced silicon in fine-dispersion form is separated and gun off cleaning stage by melting method with bulk production. For bulk producing it is used crystallizer where silicon in hydrogen medium is melted into bulk required diameter and longitude.

Reduction of silicon happens in accordance with reactions:

1. $SiO_2 + H_2\uparrow = SiO + H_2O\uparrow$ $SiO + H_2\uparrow = Si + H_2O\uparrow$
or radiation-heating

$$SiO_2 + 2H_2\uparrow \; = \; Si + 2H_2O\uparrow$$

$$Ar\uparrow \; H_2\uparrow$$

II. radiation-heating
$SiO_2 + 2Cl_2\uparrow + 2H_2\uparrow = SiCl_4 + 2H_2O\uparrow$
radiation-heating
$SiCl_4 + 2H_2\uparrow = Si + 4HCl\uparrow$
III. radiation-heating

$$SiH_4 \;\rightarrow\; Si + 2H_2\uparrow$$

$$H_2\uparrow Ar\uparrow$$

Reduction of ilmenite $FeTiO_3$ to metallic $\alpha$-Fe and from titanium dioxide $TiO_2$ till metallic titanium is done with solid reductants like coal, coke or gaseous $H_2$, CO with additions of NaOH catalyst and argon or without them in accordance with reactions:

radiation-heating

$$4FeTiO_3 + 2C + O_2\uparrow \; = \; Fe + Fe_3O_4 + 4\,TiO_2 + 2CO\uparrow$$

radiation-heating

$$4FeTiO_3 + 4C \; = \; Fe + Fe_3O_4 + 4\,Ti + 4CO_2\uparrow$$

radiation-heating

$$4FeTiO_3 + 2CO\uparrow \; + \; O_2\uparrow \; = \; Fe + Fe_3O_4 + 4TiO_2 + 2CO_2\uparrow$$

radiation-heating

$$4FeTiO_3 + 4H_2\uparrow \; = \; Fe + Fe_3O_4 + 4TiO_2 + 4H_2\uparrow$$

radiation-heating

$$4FeTiO_3 + 8H_2\uparrow \; = \; Fe + Fe_3O_4 + 4Ti + 8H_2O\uparrow$$

14. THE EXAMPLE OF FORMATION OF ROTATING CURRENT LOOP IN TRAVELLING MAGNETIC FIELD FOR $FETIO_3$ PROCESSING

**Experimental measurements of parameters during processing of 350 g of charge (burden) and approximate energy calculation for processing of one ton of $FeTiO_3$**

**1. Experiment data**

Charge contents: 5 parts of $FeTiO_3$, 1 part of graphite C
Quantity of burden (charge) taken -350 g, volume 180 mL.
Density of ilmenite-2,558 $g/cm^3$
graphite -0,9426 $g/cm^3$
charge -2,04 $g/cm^3$

The reaction $FeTiO_3 + C = Fe + TiO_2 + CO$

The experiment was divided to three phases according the number of physical states. Each phase has its own power supply. The voltage, current and energy consumption time are presented. The calculation is done on current consumed from direct current power supply.

Table 2 Parameters of the current

| | Phase 1: | Phase 2: | Phase 3: |
|---|---|---|---|
| Voltage, V | U=25 | U=25 | U=26 |
| Current, A | I=80 | I=150 | I=7,5 |
| Process time, s | t=90 | t= 180 | t=1500 |

Energy expenditure on creation of travelling magnetic field isn't taken into account. The length of stroke part of charge L=22,5 mm.

**2. Calculation of energy consumption**

The expended energy is calculated according Q=U·I·t, where Q- energy in J, U- voltage in V, I- current in A, t- time in s.

For phase 1 energy is 25·80·90=180 000 J
For phase 2 - 25·150·180=675 000 J
For phase 3 - 26·7,5·1500=292·500 J

Total energy expenditure during experiment is 180000+675000+292500=**1 147 500 J.** In W·h it is 1147500/3600=**318,75** W·h =**0,31875 kW·h**

Table 3

Parameters of consumption energy

| Phase | Voltage U, V | Current I, A | Time t, s | Energy Q=U·I·t J |
|---|---|---|---|---|
| 1 | 25 | 80 | 90 | 180 000 |
| 2 | 25 | 150 | 180 | 675 000 |
| 3 | 26 | 7,5 | 1500 | 292 500 |
| Total | | | | 1 147 500 J= 0,31875 kW·h |

**3. Calculation of energy expended per mass and charge volume unit**

Charge mass m=350 g, volume V=180 $cm^3$
To find energy expended per charge mass unit (1 g) we use P=Q/m
$P_{charge}$=Q/m =318,75 W·h/350 g = **0,91 W·h/g**
To find energy expended per charge volume unit (1 $cm^3$), we use P=Q/V
$P_{volume}$ =318,75 W·h/180 $cm^3$ = **1,77 W·h /$cm^3$**

**4. Energy density in current loop**

**Energy density in current loop (1)** (The mean energy density during operation time)

The form of current loop - ellipsoid.
Volume of ellipsoid- $V=136,7\ cm^3$ (Fig. 28 on the left)
Energy density in current loop per volume unit $=Q/V=1147500\ J/136,7\ cm^3= 8\ 394.3\ J/\ cm^3$ or $\mathbf{2.332\ W\cdot h\ /\ cm^3}$

**Energy density in current loop (2)**

The form of current loop - ellipsoid close to spherical
(The mean energy density during operation time)
Volume of ellipsoid $V=111.712\ cm^3$ (Fig. 28 on the right)
Energy density in current loop per volume unit
$=Q/V= 1\ 147\ 500\ J/111.712\ cm^3=10\ 271.95\ J\ /\ cm^2$ or $\mathbf{2.8533\ W\cdot h/cm^3}$

The averaged energy density in current loop 1 and 2 :

$(2.332+2.8533)/2\ W\cdot h\ /\ cm^3=$ $\mathbf{2.6\ W\cdot h/cm^3}$

5. The difference between energy expended per charge volume and averaged power distributed in current loop

$P_{charge}$ volume $=1,77\ W\cdot h\ /\ cm^3$
$P_{averaged}=2,6\ W\cdot h/cm^3$

The difference of energy densities is $Y=P_{average} - P_{charge\ volume} =2,6-1,77=0,83\ W\cdot h/cm^3$

Y is determined as energy losses during convection heating of apparatus elements, thermal radiation from the apparatus walls and energy not used in reaction. To diminish this parameter is possible by increasing the air-tightness of the process and better thermal insulation (reflectivity) of the walls.

$$\text{If } P_{\text{charge volume}} = 1,77\ W\ h\ /\ cm^3 = 100\%,\ Y = 0.83\cdot 100/1.77 = 46\%\ \text{-losses.}$$

So, 54% of energy expended was used in reaction.

**6. Calculation of energy expenditure for processing 1000 kg of ilmenite per hour.**

Mass and volume of charge ilmenite - **1000 kg;** graphite - **80 kg; total - 1080 kg.**

In experiment it was measured that $P_{charge}=Q/m=318,75\ W\cdot h/350\ g=$ **0,91 W·h/g**

**By multiplying 0,91 W·h/g to 1080000 we get $P_{expend.}$=0,91*1080060= 982 800 W·h/g =982,8 kW·h/kg =0,982 MW·h/ton**

The total time of three-phase process is 1,5+3+25=**29,5 min≈0,5 h**

**The volume of charge processed during 0,5 h is 540 kg**

**7. Parameters of currents for apparatus with productivity 1080 kg of charge per hour.**

There is **982,8 kW·hour** energy for treatment of 1080 Kg of charge per hour.

The voltage sufficient for breakdown is $U_{breakdown} = U/L=25/22,5=$ **1,11 V/mm** The voltage necessary for channel creation $U_{ch}= U_{breakdown}xL=1.11x150=$**166.5 V** Approximately we use the higher voltage for all three phases of process **U=250 V**

The energy expended per mass unit at each phase of experiment:

$P_{phase1}=180000\ J/350g=514\ J\ /g$

$P_{phase2}$=675000 J/350g=1928 J/g
$P_{phase3}$=292500 J/350g=835 J/g
Round numbers are given.

Approximate energy expenditure per phase for apparatus for treatment of 1080 kg of charge per hour.

Phase 1 $P_1$=1080000 g · 514 J/g = 555 120 000 J
Phase 2 $P_2$= 1080000 g · 1928 J/g = 2 082 240 000 J
Phase 3 $P_3$=1080000 g ·835 J/g = 901 800 000 J

From here one can find current I for each phase according $I_{phase}= P_{phase}/U \cdot t_{phase}$ $t_{phase}$- time in s

Phase 1: 90 s For phase 1 current $I_{phase1}$ = 555 120 000J/250V.90 s= 24 672 A

Phase 2: 180 s For phase 2 current $I_{phase2}$ = 2 082 240 000 J /250V 180 s = 46 281 A

Phase 3: 1500 s For phase 3 current $I_{phase3}$ = 901 800 000 J /250V·1500 s= 2 404 A

Table 4. Relative power, current and energy expenditure in device 1080 kg per hour

| Phase | Voltage U, B | Time t, s | Relative power $P_{discharge}$= Q/350, J/g | Current $I_{phase}= P_{phase}/U \cdot t_{phase}$, A | Relative to mass κ Macce energy expenditure P = $P_{discharge}$·1080kg, J |
|---|---|---|---|---|---|
| 1 | 250 | 90 | 514 | 24 672 | 555 120 000 |
| 2 | 250 | 180 | 1928 | 46 281 | 2 082 240 000 |
| 3 | 250 | 1500 | 835 | 2 404 | 901 800 000 |

15. THE EXAMPLE OF ANALYSES RESULTS OF ILMENITE ($FETIO_3$) SAMPLES PROCESSED IN MAGNETIC WAVES IN MVD

**Experiment 1**

Let's describe study of two samples of modified ilmenite made by X-Ray diffraction analysis using diffractometer DRON2 (soft CoαK line, λ=1,79Å, rotation velocity of detector 2°/min. The samples were produced by irradiation of ilmenite with graphite in magnetic V dipole and separation to iron and titanium oxide was done in 10% $H_2SO_4$ acid.

**Sample 1 -** magnetic fraction from modified ilmenite with the use of graphite. Sample 1 contains metallic iron α-Fe ~ 40-45% (semi-quantitative estimation of reflex integral intensity); graphite (prevails) - 45-50%; large amorphous component; rutile, anatase, brookite total less than 5%. On shown part of diffractogram (Fig.29) one can see reflexes of α-Fe and graphite. Hand-written solid angle values 2Θ correspond to reflexes of first, second etc orders for crystalline phases of rutile, ilmenite, α-Fe and graphite. High amorphous background confirms considerable destruction of crystalline phase during irradiation.

**Sample 2** was produced by cake leaching in 10% $H_2SO_4$, non-dissolved sediment was extracted and washed in the water; the iron was removed. Sample 2 contains: rutile more than 95%; brookite - leass than 5%.; quartz - low contents.

Rutile lines (on diffractogram (Fig.18) there are only rutile lines practically) are displaced comparing with standards that may be explained by stresses formation in crystal lattice of mineral during EM irradiation.

**Experiment 2**

The samples of modified ilmenite were studied by scanning electron microscope REhMA-10202 with analyzer.

On first image (Fig 31 (1)) - initial ilmenite $FeTiO_3$.

On image 2 (Fig. 32 (2)) and 3 (Fig.33 (3)) - ilmenite non-ground and modified at another irradiation regime.

Analytical data taken from initial ilmenite and points 3,4 marked on Fig. 32 (2) are shown on Fig. 34 (1,2,3):

Spectrogram of initial sample - Fig. 34 (1)

Spectrogram - aggregate $TiO_2$ (точка 3) Fig. 34 (2)

Spectrogram - aggregate a-Fe (точка 4) Fig. 34 (3).

From comparison of results and spectrogram analysis it is seen, that during modification of ilmenite in magnetic waves of MVD destruction of crystal structure of ilmenite happened and aggregates of $TiO_2$ and α-Fe were formed.

In average on sample: crystal phase of ilmenite - no more than 6%, the particle size - 0,2-0,4 mcm, in relatively non-changed state (bonds between titanium and iron atoms remained); 94% was separated to titanium and iron compounds.

**Experiment 3**

The studies of two samples of ilmenite with graphite and addition of catalyst (NaOH) were done at microanalytical setup comprising spectrometer Jeol JXA-8800R electron probe; microanalyser («Superprobe-98»); microsonde; and energy-dispersion attachment Link ISIS (OXFORD). Analysis was made on energy dispersion spectrometer; shooting conditions V=20kV, I=10A; standard - Fe, cΦeH $CaTi[SiO_4]O$.

The results confirm less degree of destruction of ilmenite when graphite is added as reductant and more degree of destruction while irradiating with graphite and soda addition:

Sample 1 with graphite (Fig.35) - fine dispersion dust.
Sample 2 with graphite and soda (Fig.36) - big and small fractions differing on contents
Big fraction (Fig.36) consists of two types of agglomerates:

- coagulated aggregates α-Fe (Fig.37), containing metallic iron 85-98%; oxidized iron 1-1,5%; inside big fraction $TiO_2$ and C are presented;
- coagulated aggregates $TiO_2$ 86-93% (Fig.38).

Coagulated phases differ by color:

Iron gives stronger fluorescence, iron coagulated aggregates are white on the photo (Fig.36). $TiO_2$ coagulated aggregates have grey color
Dark-gray color (2) mixture of $TiO_2$ and more light elements: Si, Ca, Al, Na, Mg, Mn, V, Cu. Almost black (1) - C grains.

The analyses of samples made have shown that MVD processed ilmenite decomposed to titanium dioxide and iron, which coagulates to α-Fe aggregates containing metallic iron in range 85-95%. There is also partly oxidized iron - around 1-1,5%. In titanium dioxide aggregates the contents of $TiO_2$ is in range 85-93%.

One may conclude that processed $FeTiO_3$ totally reduced till metallic iron and $TiO_2$/Ti and it's possible to extract iron and titanium from irradiated samples. The time of reduction was several minutes for 300 g of ilmenite. In comparison with decomposition of ilmenite with graphite by convection heating (resistive heating) the same reduction was after 8-10 hours at temperature 1200°C. Such comparison proves high effectiveness and economical expediency of using proposed invention in industry. In total energy consumption is reduced twice and the set-ups are compact with high productivity.

**The essence of invention**

The essence of invention is in a method of energy pumping, obtaining rotating magnetic waves for excitation of EM oscillations (substance-magnetic or substance-electric wave), and it's achieved by set of current parameters and vectors of magnetic and electric fields closed in space with energy movement direction (Pointing vector). Separate electric or magnetic energy with angles $\pm\varphi$ used in proposed invention are features of a new method of EM interaction with mineral raw materials. Resonance excitation by magnetic waves of solid state particles with common magnetic moment permits to make with high effectiveness phase transformations in materials with dielectric properties. We are claiming that structural transformations in materials with high contents of dielectric components are conducted by polarization, ionization and heating in electric field till thermo-emission in accordance with relations for electric energy movement in one direction closed in (standing wave) current loop:

$$W_E = W_M \ ; \ |\vec{E}| >> |\vec{H}| \ ; \ \frac{dW_E}{dt} >> \frac{dW_M}{dt}.$$

A principle (method) of generation of EM interaction of magnetic waves with particles of solid state or gaseous substance on resonant frequency of materials particles during inductive interactions current loop volume in traveling waves with magnetic-electrical-inertial confinement for any time has no analogs and permits to get energy pumping and high temperatures with phase transformations in solid, dry and gaseous materials with complex crystal lattices. EM interaction takes place in traveling magnetic or electric waves with controlled orientation of field directions. For the first time in traveling waves resonant interaction aimed to phase transition of second type $Fe_2O_3 \rightarrow Fe_3O_4$ is organized, thus permitting to destruct bonds in crystal lattice of ilmenite $FeTiO_3$ till total reduction of Fe and Ti. The same reduction is possible with many other metals for use in industry. The traveling field is organized by orientation of vectors and the value of parameters of mean geometric of force (see oscillating-rotating model). Unusual type of excitation of EM interactions is confirmed by large number of experiments and calculations performed. Experimental setups permitted to get data for designing large scale equipment with productivity more than 1t/hour and more for ilmenite. The calculations of busyness plan were made to show profitability and economic advisability of proposed invention.

The claim that, structural transformations in materials with low contents of dielectric components and high contents of magnetic ones are conducted in relation for magnetic wave movement in traveling magnetic field (wave), closed in current loop in one direction of energy movement: $W_M = W_E \ ; \ |\vec{H}| >> |\vec{E}| \ ; \ \frac{dW_M}{dt} >> \frac{dW_E}{dt}$. This feature of invention permits to change structures of multi-component materials by decomposition, oxidation, reduction with high effectiveness and economically cheaper in comparison with chemical reactions.

Using our setups it is possible conduct unknown before reactions on decomposition, destruction, synthesis on molecular level. Reactions on reduction of silicon from $SiO_2$ carbon, hydrogen, chlorine for the first time became possible since it is possible to regulate the amount of electric or magnetic energy to keep the reaction per time unit. Resonant structure arranged by geometry, the amount of energy in current loop, permits intently produce silicon of varying quality in different stages of production. It is possible to operate with gaseous phases with silicon containing gases with high productivity and reactions maybe implemented in the stream. The amount of energy fed for implementation of reactions claimed is restricted by temperature hardness of used materials cooled by water, thus permitting essential simplification of set-up design. The equipment is compact and production is in stream.

We claim a method of regulation of angle $\varphi$ on various stages of mineral material processing together with a method of energy resonant accumulation thus permitting to create devices for structural transformations with broad range of dielectric and magnetic properties of minerals. Angle $\varphi$ may be chosen for various materials experimentally or by calculation. A method of energy accumulation during structural transformation of substance by magnetic inertial confinement is novelty and may be widely used in industry in a series of inventions. For example, in obtaining and transmission of electric energy, in engines developing subluminal velocities etc.

The essence of invention is justified in details in proposed invention. In description of invention many novelties are shown for possible application in design of equipment and method implementation. The results of getting products from ilmenite $FeTiO_3$ are shown. Analytical data, X ray structural analysis, scanning electron microscopy and other data confirming our method and MW apparatus implementation are presented for silicon and titanium containing raw materials.

The described essence of invention justified by us and proposed claims were tested and confirmed multiply in experiments.

**Captions for figures**

Fig.1. Oscillator-rotating model in two inertial systems.
Fig.2. Two events in two inertial systems.
Fig.3. Block-scheme of two-gap resonator with interaction areas AB and CD: drift tube -1; external resonator screen -2; resonant line -3; electrostatic field source or PVG-300 -$C_1$; electron source, cathodes -4; measuring probes -5.
Fig.4. Resonator without drift tube: cathode -C; anode -A.
Fig.5. General view of RO-2 set-up.
Fig.6. RO-2 system: 1- drift tube (anode); 2- cathode; 3- RO-2 system; 4- shunt of opposite current (SOC); 5- Rogowsky belt; 6- pass-through insulators; 7- electrical probes; 8- pulse from PVG-300; 9- pulse from pulse transformer (PT).
Fig.7. Electrical scheme PVG-300.
Fig.8. Oscillograms of voltage pulse: upper is from PVG output; average is from RO-2 system; lower is high frequency generator marks f=50 MHz, whole scanning 500 ns.
Fig.9. Electical scheme of experiment.
Fig.10. Electrical effective scheme of experiment.
Fig. 11. Block-scheme of MVD measurements: 1- power supply at 8 kV, 2.5 kW; 2- unit of angle $\pm\varphi$ operation; 3-resonant inductance of RLC circuit of MVD; 4- MVD reactor; 5-inductance of RLC oscillating circuit $C_{eff}$; 6- measuring shunt; 7- measuring oscillograph; 8-winding of static magnetic field and power supply of direct current.
Fig.12. Processes of current loop formation at 8 kV voltage (photo).
Fig.13. Magnetic wave packet at voltage 50 kV.
Fig. 14. Current oscillogram.
Fig.15. Electric power supply scheme of MVD.
Fig.16. Disposition of coils XA, YB, ZC, giving rotating magnetic field.
Fig.17. Rotating magnetic field. Time dependence of $H_A$, $H_B$, $H_C$.
Fig.18. Rotating magnetic field. Vector summing of fields at: t=0, t=T/3, t=2T/3, when fields $H_A$, $H_B$, $H_C$ are zero.
Fig.19. The scheme of MVD dipole formation: 1,6- raw material feed device; 3,5- electrodes; 2- solenoid winding; 4- electron-ion current loop and vectors of rotating magnetic fields; 7- magnetic flux.
Fig.20. Oscillogram of closed current and magnetic field in outer circuit of MVD.
Fig.21. The scheme of oscillation circuit.
Fig.22. The scheme of oscillation circuit with alternate connection charged capacitors.
Fig.23. Time dependence of $I_R$, $I_C$, $I_L$.
Fig.24. Formation of current pulse of arbitrary form.
Fig.25. Formation of flat top of current pulses.
Fig.26. Equatorial travelling magnetic field formed by current loop.
Fig.27. Azimuthally travelling magnetic field formed by current loop.
Fig.28. The scheme of set-up for conducting experiments without chamber walls: ellipsoid form of current loop - left; ellipsoid like sphere form - right.
Fig.29. The part of diffractogram of modified ilmenite with reflexes from $\alpha$-Fe and graphite.
Fig.30. The part of diffractogram of modified ilmenite with rutile lines.
Fig.31. Photo of initial sample of ilmenite $FeTiO_3$ (from scanning electron microscope REhMA-10202).
Fig.32. Photo of ilmenite sample non-ground modified.
Fig.33. Photo of ilmenite sample non-ground modified at an other irradiation regime.
Fig.34. Spectrograms of samples: upper is initial ilmenite; middle is titanium dioxide aggregate in modified ilmenite (point 3 on Fig.32); lower is iron aggregate (point 4 ibid).
Fig.35. Photo of ilmenite sample modified with graphite (micro-analytical setup JEOL).
Fig.36. Photo of ilmenite sample modified with graphite with addition of NaOH as catalyst, big fraction.
Fig.37. Spectrograms of modified ilmenite aggregates with graphite sample with addition NaOH: coagulated aggregates $\alpha$-Fe (85-98%);
Fig.38. Spectrograms of modified ilmenite aggregates with graphite sample with addition NaOH: coagulated aggregates $TiO_2$ 86-93%.

REFERENCES

1. «Method of generating nuclear energy». Kolesnik V.G. , Urusova E.V., Ulugmuradov C.Eh. i dr.// Patent RUz # IAP 03701 from 12.10.2005.
2. Siemens AG. Process and apparatus for pyrolytic production of pure semiconductor material, preferably silicon.// US Patent 3,286,685 11/66.
3. Reifenberg, Gerald H. Process for preparing monohydrocarbyltin trihalides.
// US Patent 4,148,814 04/79.
4. Yatsurugi, Yoshifuni et al. Method and apparatus for manufacturing high-purity silicon rods.
// US Patent 4,150,168 04/79
5. Poong Yoon et al. Method of preparing a high-purity polycrystalline silicon using a microwave heating system in fluidized bed reactor.// US Patent 4,900,411 2/1990.
6. Pridel Marcus et al. Nanometer crystalline powder silicon.// RU Patent 11/2004
7. Jorg Knipping et al. High Purity Silicon Nanoparticles.// J.Nanosci.Nanotech.(2004) Vol.4, No8: 1039-1044.

8. Gavrilov P.M. et al. Apparatus for polycrystalline silicon production. // RU Patent 2,334,667 C 1 2/2007.
9. Muravitskij S.A. et al. Method of polycrystalline silicon production. // RU Patent 2,342,320 C2 2/2007.
10. Weidhaus, Dieter et al. Radiation-heated fluidized-bed reactor. // US Patent 7,029,632 B1 4/2006.
11. Stephen, Lord M. et al. Silicon deposition reactor apparatus. // US Patent 5,810,934 9/1998.
12. Iida, Shigehira et al. Microwave plasma CVD apparatus heaving and improved microwave transmissive window.// US Patent 4,930,442 5/1990.
13. Takai, Yasuyoshi et al. Process for using microwave plasma CVD. // US Patent 5,597,623 1/1997.
14. Hee Y. Kim et al .Fluidized bed reactor heated by microwaves.// US Patent 5,382,412 1/1995.
15. Taguchi, Masani et al. Microwave irradiation apparatus.// US Patent 2008/0272114 A1 1/2008.
16. Aklufi Monti E. et al. Plasma generator utilizing dielectric member for carrying microwave energy.// US Patent 5,023,056 11/1991
17. Roy, Rustum et al. Microwave processing in pure H fields and pure E fields. // US Patent 6,365,885 B1 4/2002
18. Li, Sang Hun et al. Nuzzle of microwave plasmatron with raised stability of torch and efficiency of heating.// RU Patent 2007/104587 A 7/2004
19. Rustum Roy et al. Definite experimental evidence for MW Effects.// Mat Res Innovat (2002) 6: 128-140.
20. Bakanov Yu. al. Proposal for Obtaining silicon polycrystalline in plasma of the MW discharge. // 2/2006, Project. Internet site.
21. Belov, E.P. et al. Method of monosilane and high purity polycrystalline silicon production. // RU Patent 2,329,196 C1 10/2006.
22. Murakami, Tsutomu et al. Apparatus for forming functional deposited film by microwave plasma CVD process.// US Patent 4,998,503 3/1991
23. Ueno, Tsuoshi et al. Method of forming amorphous silicon film. // US Patent 4,532,199 07/1985.
24. Ono, Tetsuo et al. Plasma processing method and plasma processing apparatus. // US Patent 6,888,094 5/2005
25. Rosocha, Louis Andrew et al. Plasma-based reduction of titanium oxides. // US Patent 2009/0107290 4/2009.
26. Verbitskii I.L., Kovalenko A.D., Kolesnik V.G. Skhema parametricheskogo preobrazovanita energii.// JINR Reports R9-90-371, Dubna, 1990.
27. Kolesnik V.G., Verbitskii I.L., Tsitovich P.A. O printsipe pryamogo preobrazovanita energii. //In book Kolesnik V.G., Khon Cher Sun et al. Uskoriteli pryamogo dejstvita I SVCh generatory na ikh osnove. Tashkent, FAN, 1990, p.247-259.
28. Kolesnik V.G., Gelfeld A.Yu., Gelfeld T.M. O dvizhenii chastits v elektromagnitnykh polyakh.// ASD UzSSR, 1988, #10, p.26-29.
29. Verbitskii I.L. On the method of solving the Helmholtz.// J.Math.Phys., 1981, V.22, #1, pp.32-38; V.23, #4, pp.510-516.
30. Verbitskii I.L. Obobshennyj proektsionnyj metod.// ASD USSR, 1987, v.294, #1, p.72-75.

## Claims

1. A method of reduction silicon and titanium by generation of electromagnetic interactions of $SiO_2$ and $FeTiO_3$ particles with magnetic waves, wherein energy pumping is implemented in crossing fields with parametric resonance in RLC circuit with multi-mode modulation on resonance frequencies in range $10^5 \div 10^{12}$ Hz and more during inductive interaction of $SiO_2$ or $FeTiO_3$ raw material's particles in travelling magnetic and electric waves with circular or elliptic polarization in closed volume of electron-ion current loop or particle vortices of rotor type cyclic frequency range $10^1 \div 10^6$ Hz with magnetic-electric-inertial confinement of rotating magnetic and electric waves of stator type.

2. A method according to claim 1, wherein electromagnetic interactions in raw material with high contents of dielectric components and low contents of magnetic ones are conducted in waves with positive phase angle in accordance with relations :

$$W_E = W_M \; ; \; |\bar{E}| >> |\bar{H}| \; ; \; \frac{dW_E}{dt} >> \frac{dW_M}{dt},$$

and also in raw material with low contents of dielectric components and high contents of magnetic ones are conducted in waves with negative phase angle in accordance with relations :

$$W_M = W_E \; ; \; |\vec{H}| >> |\vec{E}| \; ; \; \frac{dW_M}{dt} >> \frac{dW_E}{dt},$$

where $W_E$ - energy of electric field; $W_M$ - energy of magnetic field;
$\bar{E}$- strength of electric field; $\bar{H}$- strength of magnetic field;

**3.** A method according to claims 1, 2, wherein reduction of silicon from fine-dispersion sorbent $SiO_2$ or silicon containing gases is done by obtaining fine-dispersion powder or silicon ingot preliminary saturated by hydrogen in hydrogen medium in the presence of argon or without it at temperatures 600 - 1200 C in accordance with reactions or their other options:

I. $SiO_2 + H_2\uparrow = SiO + H_2O\uparrow$
$SiO + H_2\uparrow = Si + H_2O\uparrow$
or

radiation -heating

$$SiO_2 + 2H_2\uparrow = Si + 2H_2O\uparrow$$

$H_2\uparrow$, $Ar\uparrow$

II. radiation -heating
$SiO_2 + 2Cl_2\uparrow + 2H_2\uparrow = SiCl_4 + 2H_2O\uparrow$
radiation -heating
$SiCl_4 + 2H_2\uparrow = Si + 4HCl\uparrow$
III. radiation -heating

$$SiH_4 \rightarrow Si + 2H_2\uparrow$$

$H_2\uparrow$, $Ar\uparrow$

**4.** A method according to claims 1, 2, 3, wherein reduction of metallic $\alpha$-Fe from ilmenite. $FeTiO_3$ and titanium dioxide $TiO_2$ till metallic titanium in the volume of current loop is done with phase transformation $Fe_2O_3 \rightarrow Fe_3O_4$ with solid reductants like coal, coke, graphite or gaseous $H_2\uparrow$, $CO\uparrow$ in argon medium or without it or according the reactions or their other options:

radiation -heating

$$4FeTiO_3 + 2C + O_2\uparrow = Fe + Fe_3O_4 + 4\,TiO_2 + 2CO\uparrow$$

radiation -heating

$$4FeTiO_3 + 4C = Fe + Fe_3O_4 + 4\,Ti + 4CO_2\uparrow$$

$$FeTiO_3 + CO\uparrow + O_2\uparrow \overset{\text{radiation -heating}}{=} Fe + Fe_3O_4 + Ti + CO_2\uparrow$$

$$4FeTiO_3 + 4H_2\uparrow + 2O_2\uparrow \overset{\text{radiation -heating}}{=} Fe + Fe_3O_4 + 4TiO_2 + 4H_2O\uparrow$$

$$4FeTiO_3 + 8H_2\uparrow \overset{\text{radiation -heating}}{=} Fe + Fe_3O_4 + 4Ti + 8H_2O\uparrow$$

**Patentansprüche**

1. Verfahren zur Reduktion von Silicium und Titan durch Erzeugung elektromagnetischer Interaktionen von $SiO_2$ und $FeTiO_3$ Teilchen mit magnetischen Wellen, wobei ein Pumpen von Energie in kreuzenden Feldern mit parametrischer Resonanz in einer RLC-Schaltung mit Multimodenmodulation auf Resonanzfrequenzen im Bereich von $10^5 \div 10^{12}$ $H_z$ und mehr während einer induktiven Interaktion von Teichen aus $SiO_2$ oder $FeTiO_3$ Rohmaterial in wandernden magnetischen oder elektrischen Wellen mit zirkularer oder elliptischer Polarisation in einem geschlossenen Volumen einer Elektronen-Ionenstromschleife oder Teilchenwirbeln vom Rotortyp bei zyklischer Frequenz im Bereich von $10^1 \div 10^6$ Hz mit magnetisch-elektrischem Trägheitseinschluss von sich drehenden magnetischen und elektrischen Wellen vom Statortyp implementiert wird.

2. Verfahren gemäß Anspruch 1, wobei elektromagnetische Interaktionen in dem Rohmaterial mit hohen Gehalten von dielektrischen Komponenten und niedrigen Gehalten von magnetischen Komponenten in Wellen mit positivem Phasenwinkel in Übereinstimmung mit den folgenden Beziehungen ausgeführt werden:

$$W_E = W_M \; ; \; |\vec{E}| >> |\vec{H}| \; ; \; \frac{dW_E}{dt} >> \frac{dW_M}{dt},$$

und auch in Rohmaterialien mit niedrigen Gehalten von dielektrischen Komponenten und hohen Gehalten von magnetischen Komponenten in Wellen mit negativem Phasenwinkel in Übereinstimmung mit den folgenden Beziehungen ausgeführt werden:

$$W_M = W_E \; ; \; |\vec{H}| >> |\vec{E}| \; ; \; \frac{dW_M}{dt} >> \frac{dW_E}{dt},$$

worin $W_E$- die Energie eines elektrischen Feldes ist; $W_M$- die Energie eines Magnetfeldes ist; $\overline{E}$- die Stärke eines elektrischen Feldes ist; $\overline{H}$- die Stärke eines Magnetfeldes ist.

3. Verfahren gemäß Anspruch 1, 2, wobei die Reduktion von Silicium aus Feindispersions-Sorptionsmittel $SiO_2$ oder siliciumhaltigen Gasen durch Erhalten von Feindispersionspulver oder Siliciumingot erfolgt, der im Vorfeld durch Wasserstoff in Wasserstoffmedium in Gegenwart von Argon oder ohne dieses bei Temperaturen von 600 bis 1200 C gemäß den folgenden Reaktionen oder ihren anderen Optionen gesättigt wurde:

I. $SiO_2 + H_2\uparrow = SiO + H_2O\uparrow$
$SiO + H_2\uparrow = Si + H_2O\uparrow$
oder

Strahlungs - Erwärmung

$$SiO_2 + 2H_2\uparrow = Si + 2H_2O\uparrow$$

$H_2\uparrow, Ar\uparrow$

II. Strahlungs - Erwärmung
$SiO_2 + 2Cl_2\uparrow + 2H_2\uparrow = SiCl_4 + 2H_2O\uparrow$
Strahlungs - Erwärmung
$SiCl_4 + 2H_2\uparrow = Si + 4HCl\uparrow$
III. Strahlungs - Erwärmung

$$SiH_4 \rightarrow Si + 2H_2\uparrow$$

$H_2\uparrow, Ar\uparrow$

**4.** Verfahren gemäß Anspruch 1, 2, 3, wobei die Reduktion von metallischem $\alpha$-Fe aus Ilmenit $FeTiO_3$ und Titandioxid $TiO_2$, bis metallisches Titan in dem Stromschleifenvolumen erhalten wird, mit Phasentransformation von $Fe_2O_3 \rightarrow Fe_3O_4$ mit festen Reduktionsmitteln wie Kohle, Koks, Graphit oder gasförmigem $H_2\uparrow$, $CO\uparrow$ in Argonmedium oder ohne dieses oder gemäß den folgenden Reaktionen oder ihren anderen Optionen erfolgt:

Strahlungs - Erwärmung
$4FeTiO_3 + 2C + O_2\uparrow = Fe + Fe_3O4 + 4\ TiO_2 + 2CO\uparrow$
Strahlungs - Erwärmung
$4FeTiO_3 + 4C = Fe + Fe_3O_4 + 4\ Ti + 4CO_2\uparrow$
Strahlungs - Erwärmung
$FeTiO_3 + CO\uparrow + O_2\uparrow = Fe + Fe_3O_4 + Ti + CO_2\uparrow$
Strahlungs - Erwärmung
$4FeTiO_3 + 4H_2 + 2O_2\uparrow = Fe + Fe_3O_4 + 4TiO_2 + 4H_2O\uparrow$
Strahlungs - Erwärmung
$4FeTiO_3 + 8H_2\uparrow = Fe + Fe_3O_4 + 4Ti + 8\ H_2O\uparrow$

## Revendications

**1.** Procédé de réduction de silicium et de titane par génération d'interactions électromagnétiques de particules de $SiO_2$ et $FeTiO_3$ avec des ondes magnétiques, dans lequel le pompage d'énergie est mis en oeuvre dans des champs croisés avec une résonance paramétrique dans un circuit RLC avec une modulation multi-mode sur une gamme de fréquence de résonance de $10^5 \div 10^{12}$ Hz et plus lors de l'interaction inductive des particules de matériau brut de $SiO_2$ ou $FeTiO_3$ dans des ondes propageantes magnétiques et électriques avec une polarisation circulaire ou elliptique dans un volume fermé d'une boucle de courant d'ion-électron ou de vortex de particules ayant une gamme de fréquence cyclique de type rotor de $10^1 \div 10^6$ Hz avec un confinement inertiel-magnétique-électrique d'ondes magnétiques et électriques en rotation de type stator.

**2.** Procédé selon la revendication 1, dans lequel les interactions électromagnétiques dans le matériau brut avec une teneur élevée de composantes diélectriques et une teneur basse de composantes magnétiques sont effectuées dans des ondes avec un angle de phase positif en conformité avec les relations :

$$W_E = W_M \; ; \; |\bar{E}| >> |\bar{H}| \; ; \; \frac{dW_E}{dt} >> \frac{dW_M}{dt},$$

et également dans le matériau brut avec une teneur basse de composantes diélectriques et une teneur haute de composantes magnétiques sont effectuées dans des ondes avec un angle de phase négatif en conformité avec les relations :

$$W_M = W_E\ ;\ |\vec{H}| >> |\vec{E}|\ ;\ \frac{dW_M}{dt} >> \frac{dW_E}{dt},$$

dans lequel $W_E$- énergie du champs électrique ; $W_M$-énergie du champs magnétique ; $\overline{E}$- force du champs électrique ; $\overline{H}$- force du champs magnétique.

**3.** Procédé selon les revendications 1, 2, dans lequel la réduction de silicium d'un sorbant en fine dispersion de $SiO_2$ ou de silicium comprenant des gaz est effectuée par l'obtention d'une poudre en fine dispersion ou d'un lingot de silicium préliminairement saturé par de l'hydrogène dans un milieu d'hydrogène en présence d'argon ou sans argon à des températures de 600 - 1200°C en conformité avec les réactions ou leurs autres options :

I. $SiO_2 + H_2\uparrow = SiO + H_2O\uparrow$
$SiO + H_2\uparrow = Si + H_2O\uparrow$
ou
radiation-chauffage

$$SiO_2 + 2H_2\uparrow = Si + 2H_2O\uparrow$$

$H_2\uparrow$, $Ar\uparrow$

II. radiation-chauffage
$SiO_2 + 2Cl_2\uparrow + 2H_2\uparrow = SiCl_4 + 2H_2O\uparrow$
radiation-chauffage
$SiCl_4 + 2H_2\uparrow = Si + 4HCl\uparrow$
III. radiation-chauffage

$$SiH_4 \rightarrow Si + 2H_2\uparrow$$

$H_2\uparrow$, $Ar\uparrow$

**4.** Procédé selon les revendications 1, 2, 3, dans lequel la réduction de α-Fe métallique d'ilménite $FeTiO_3$ et de dioxyde de titane $TiO_2$ jusqu'au titane métallique dans le volume de la boucle de courant est effectué avec une transformation de phase $Fe_2O_3 \rightarrow Fe_3O_4$ avec des réducteurs solides tel que du charbon, du coke, du graphite ou du $H_2\uparrow$, $CO\uparrow$ gazeux dans un milieu d'argon ou sans argon ou selon les réactions ou leurs autres options :

Radiation-chauffage

$$4FeTiO_3 + 2C + O_2\uparrow = Fe + Fe_3O_4 + 4\ TiO_2 + 2CO\uparrow$$

Radiation-chauffage

$$4FeTiO_3 + 4C = Fe + Fe_3O_4 + 4\ Ti + 4CO_2\uparrow$$

Radiation-chauffage

$$FeTiO_3 + CO\uparrow + O_2\uparrow = Fe + Fe_3O_4 + Ti + CO_2\uparrow$$

Radiation-chauffage

$$4FeTiO_3 + 4H_2\uparrow + 2O_2\uparrow \quad = \quad Fe + Fe_3O_4 + 4TiO_2 + 4H_2O\uparrow$$

Radiation-chauffage

$$4FeTiO_3 + 8H_2\uparrow \quad = \quad Fe + Fe_3O_4 + 4Ti + 8H_2O\uparrow$$

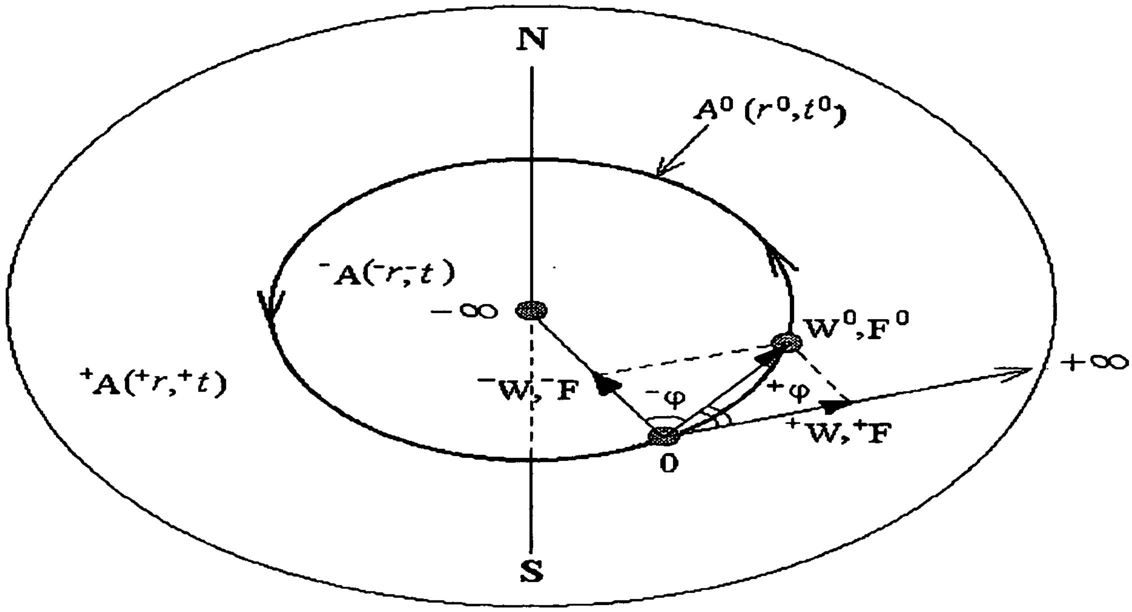
N
$A^0$ ($r^0$,$t^0$)
$^-A$($^-r$,$^-t$)
$-\infty$
$W^0$,$F^0$
$^+A$($^+r$,$^+t$)
$^-W$,$^-F$
$^-\varphi$
$^+\varphi$
$+\infty$
$^+W$,$^+F$
0
S

Fig.1.

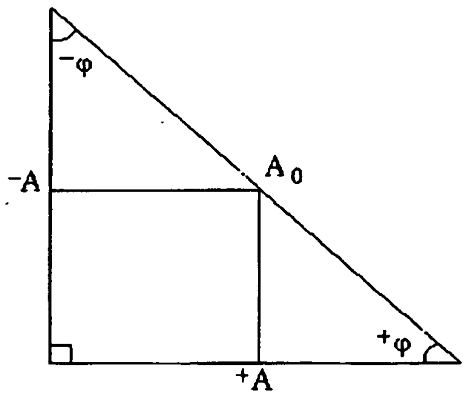
$^-\varphi$
$^-A$
$A_0$
$^+\varphi$
$^+A$

Fig.2.

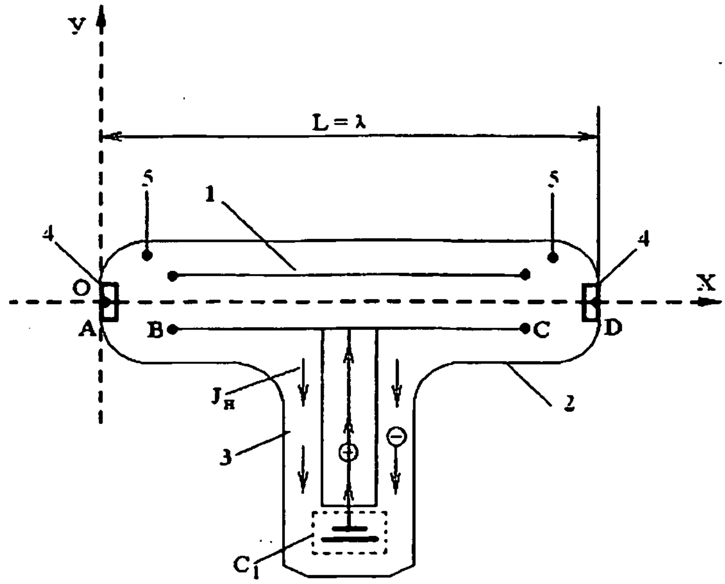

Fig.3.

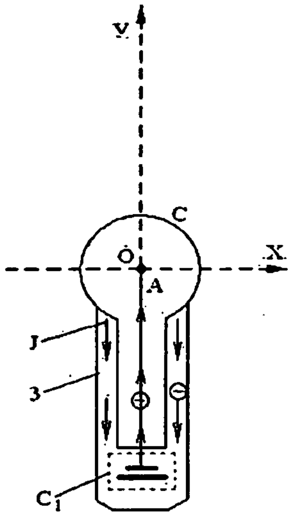

Fig.4.

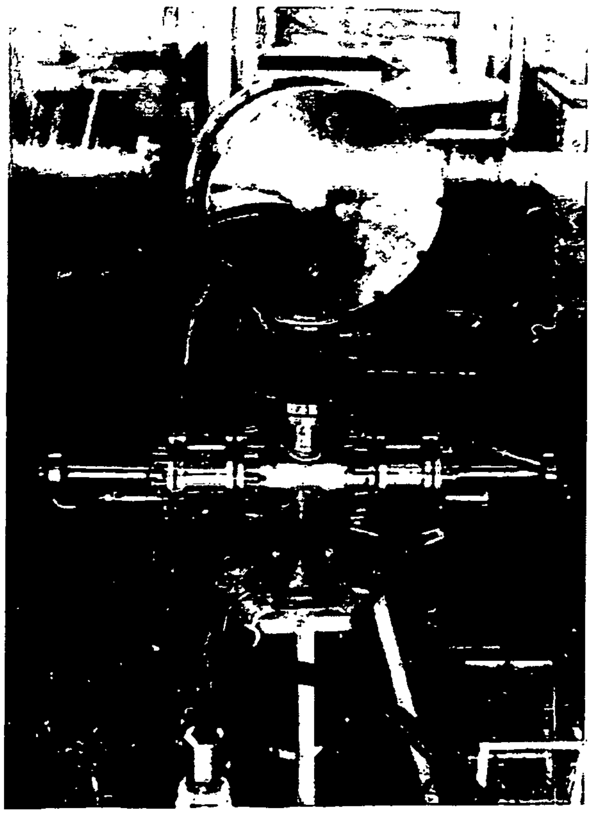
Fig.5.

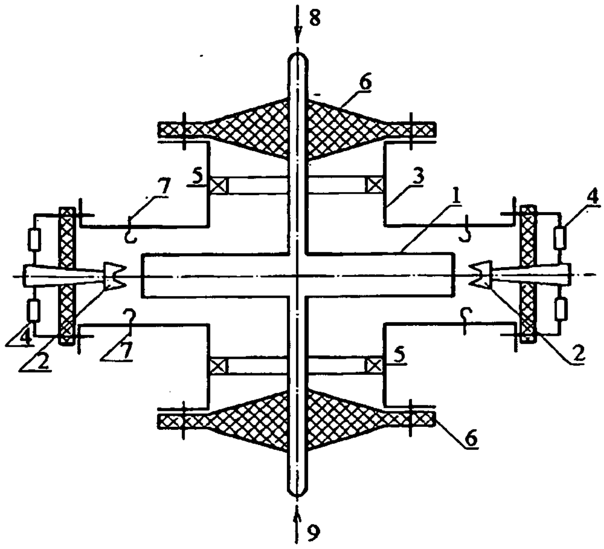


Fig.6.

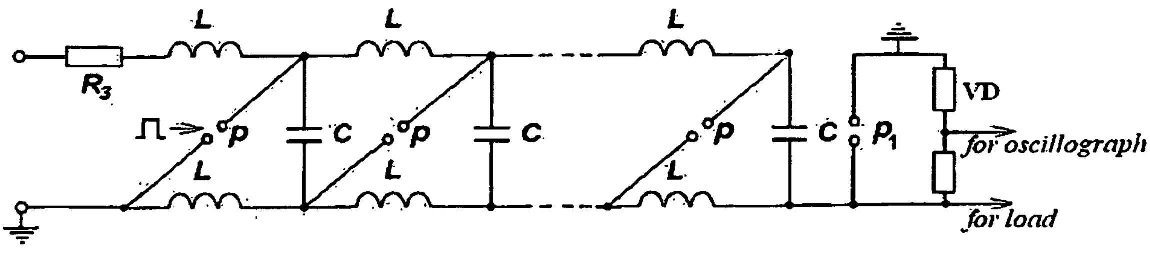


Fig.7.

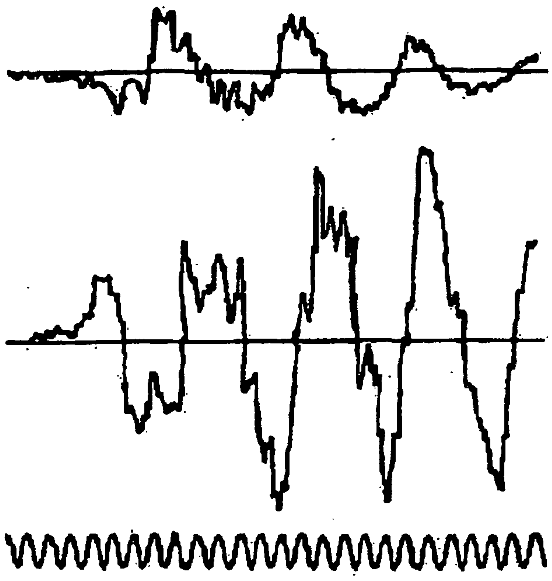

Fig.8.

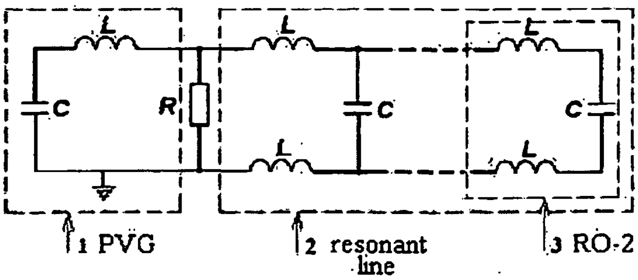


Fig.9.

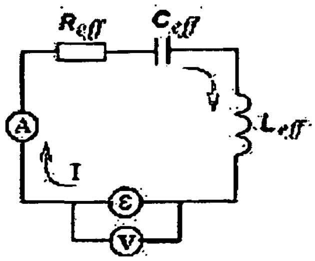


Fig.10.

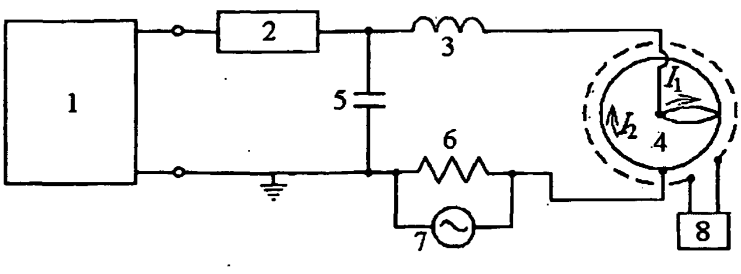


Fig.11.

METHOD FOR OBTAINING SILICON AND TITANIUM
BY GENERATING ELECTROMAGNETIC INTERACTION BETWEEN
$SiO_2$ AND $FeTiO_3$ PARTICLES AND MAGNETIC WAVES

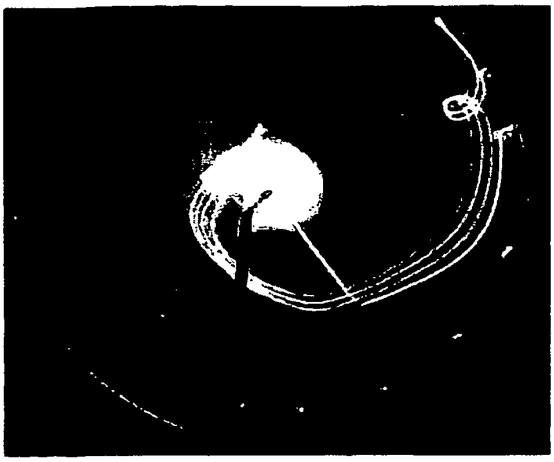

Fig.12.

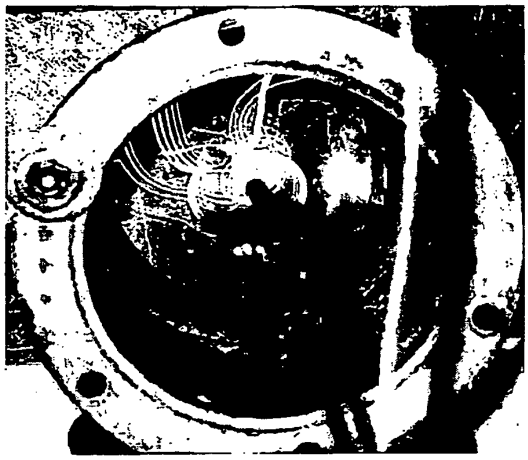

Fig.13.

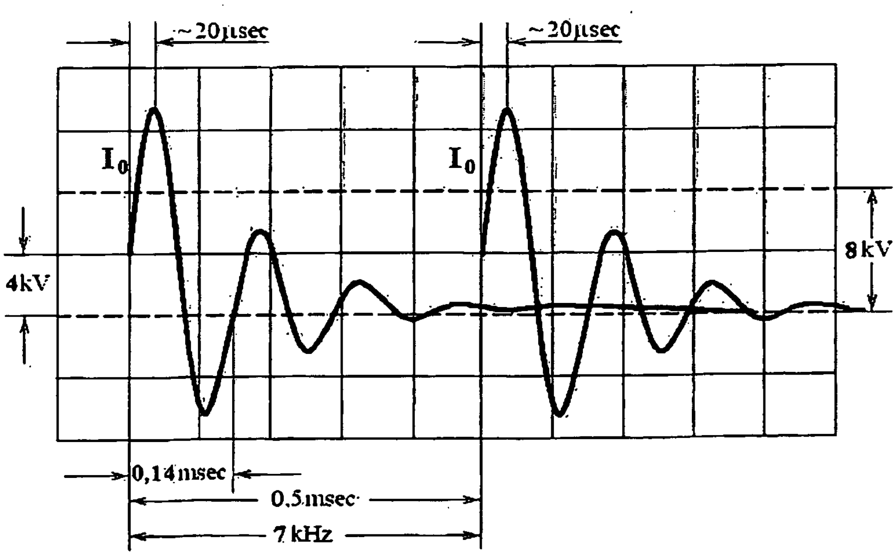


Fig.14.

METHOD FOR OBTAINING SILICON AND TITANIUM BY GENERATING ELECTROMAGNETIC INTERACTION BETWEEN $SiO_2$ AND $FeTiO_3$ PARTICLES AND MAGNETIC WAVES

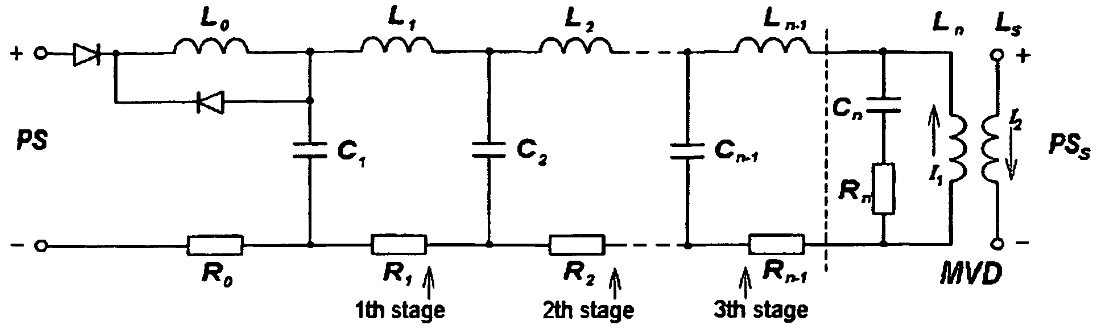


Fig.15.

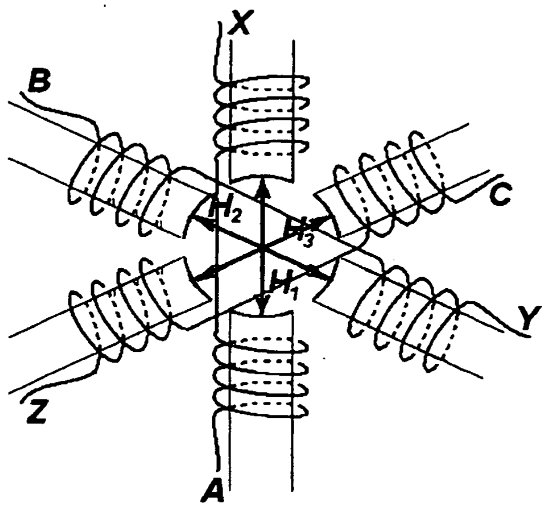


Fig.16.

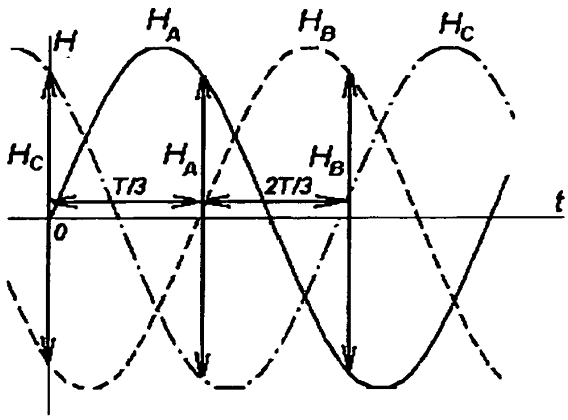


Fig.17.

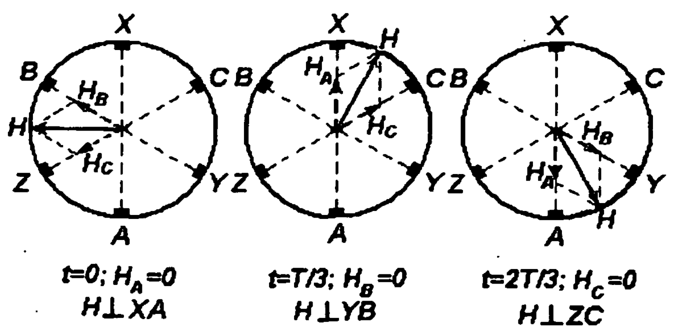


Fig.18.

METHOD FOR OBTAINING SILICON AND TITANIUM
BY GENERATING ELECTROMAGNETIC INTERACTION BETWEEN
$SiO_2$ AND $FeTiO_3$ PARTICLES AND MAGNETIC WAVES

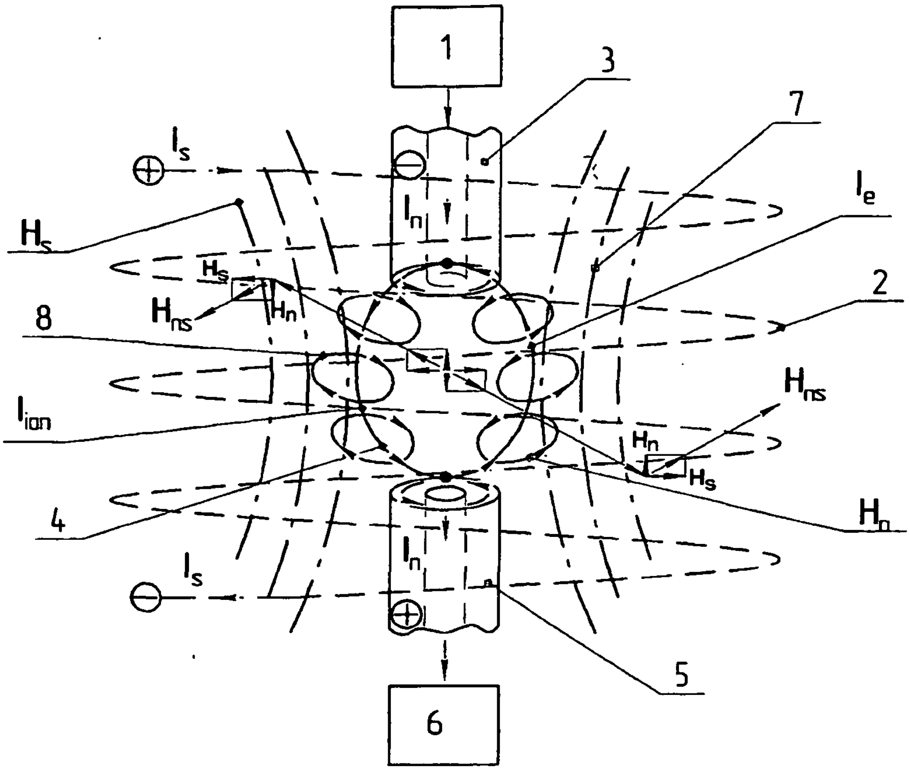

Fig.19.

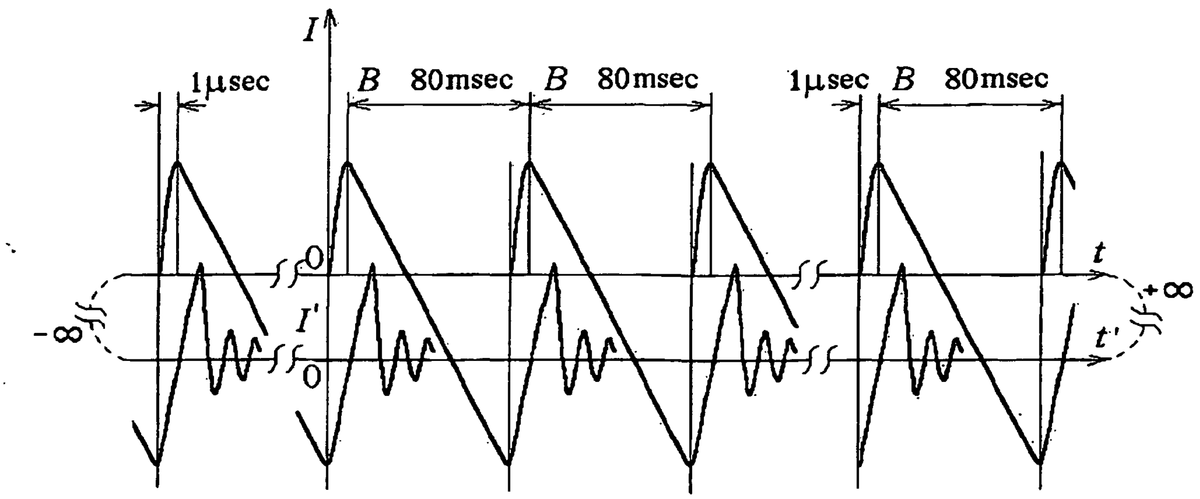

Fig.20.

METHOD FOR OBTAINING SILICON AND TITANIUM
BY GENERATING ELECTROMAGNETIC INTERACTION BETWEEN
$SiO_2$ AND $FeTiO_3$ PARTICLES AND MAGNETIC WAVES

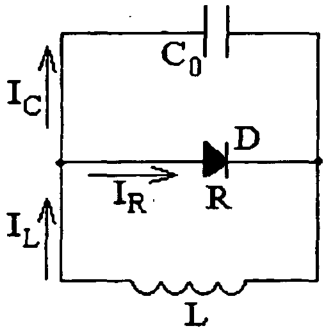


Fig.21.

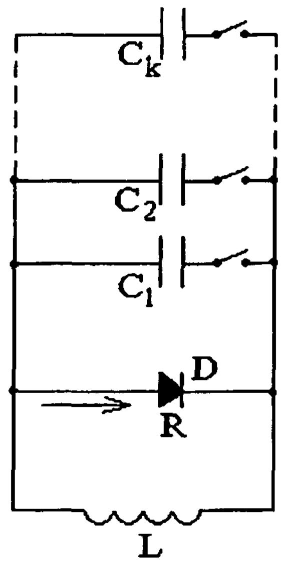


Fig.22.

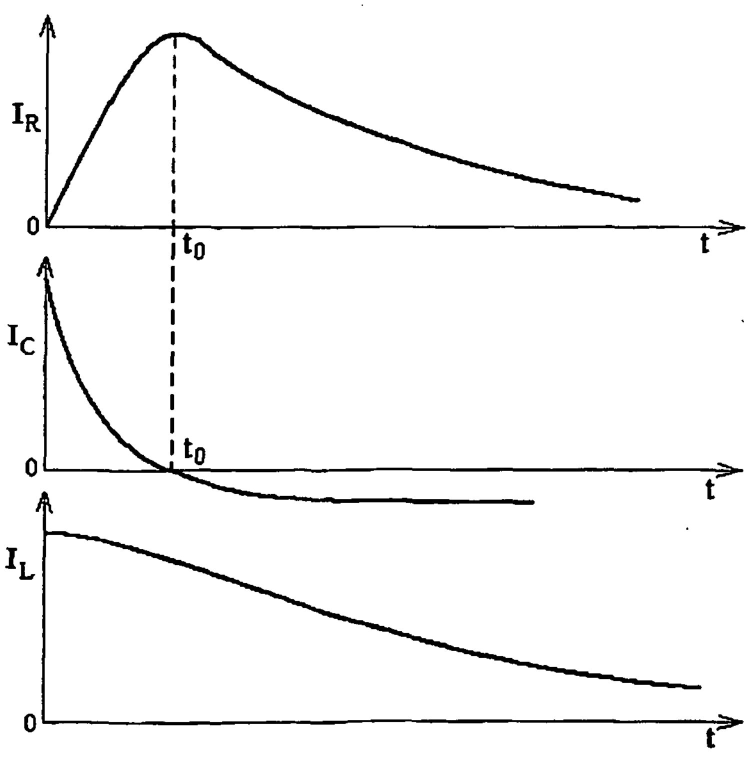


Fig.23.

METHOD FOR OBTAINING SILICON AND TITANIUM BY GENERATING ELECTROMAGNETIC INTERACTION BETWEEN $SiO_2$ AND $FeTiO_3$ PARTICLES AND MAGNETIC WAVES

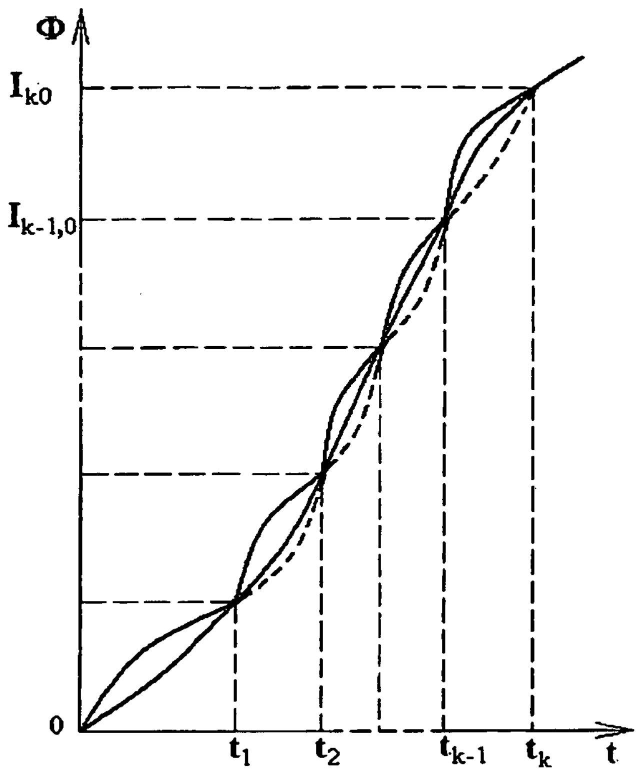


Fig.24.

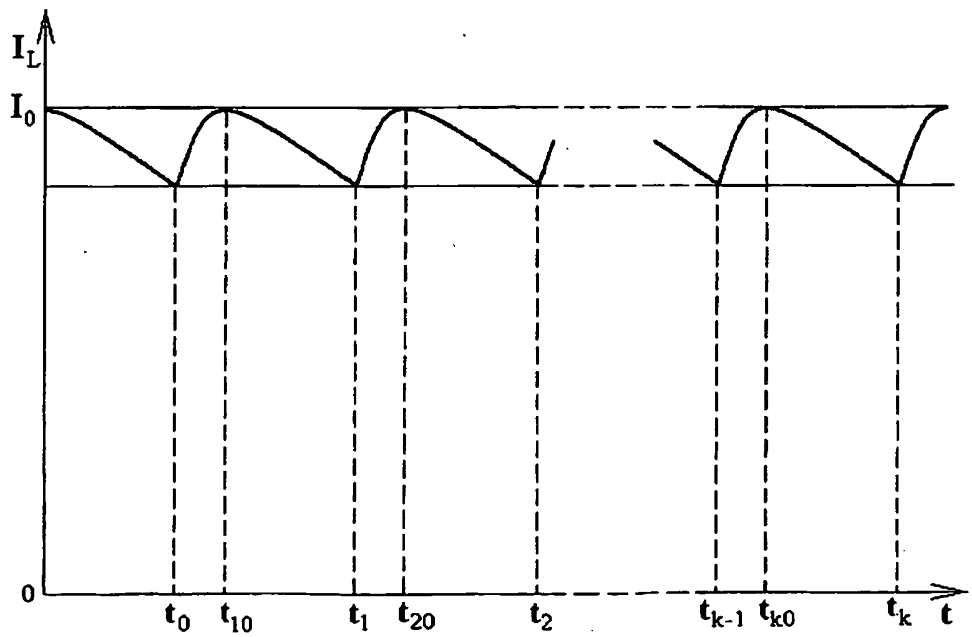


Fig.25.

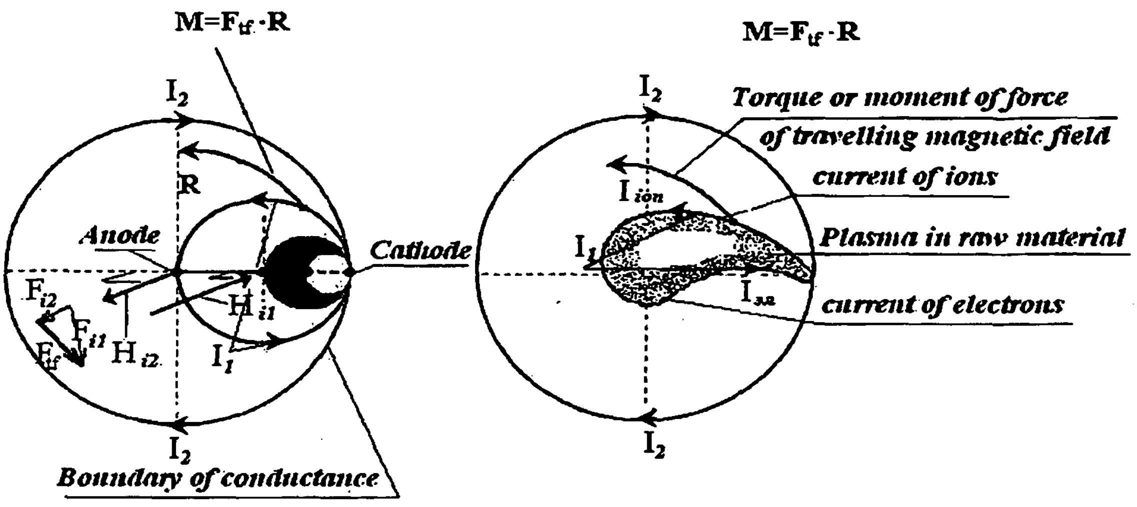
M=Ftf·R
I2
R
Anode
Cathode
Fi2
Fi1
Ftf
Hi2
Hi1
I1
I2
Boundary of conductance
M=Ftf·R
I2
Torque or moment of force
of travelling magnetic field
I ion
current of ions
I1
Plasma in raw material
current of electrons
I2

Fig.26.

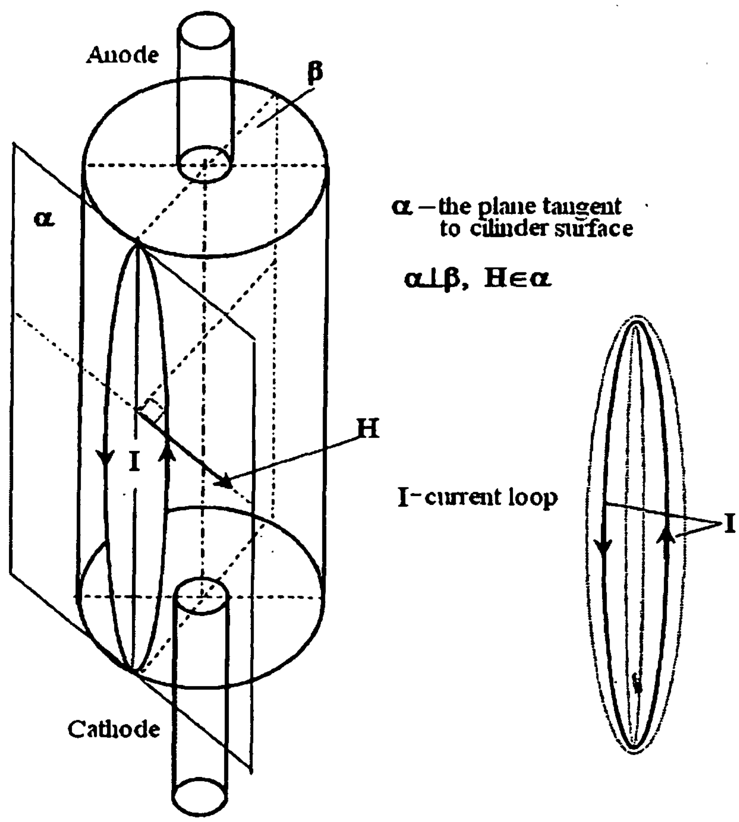
Anode
β
α
α – the plane tangent
to cilinder surface
α⊥β, H∈α
H
I
I – current loop
I
Cathode

Fig.27.

METHOD FOR OBTAINING SILICON AND TITANIUM BY GENERATING ELECTROMAGNETIC INTERACTION BETWEEN $SiO_2$ AND $FeTiO_3$ PARTICLES AND MAGNETIC WAVES

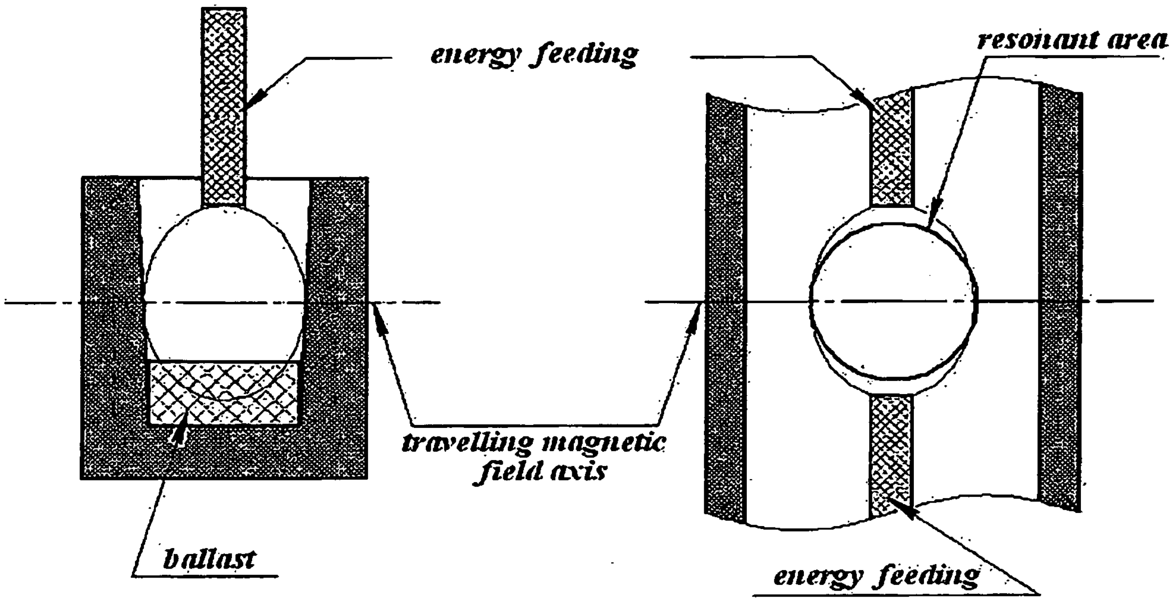


Fig.28.

METHOD FOR OBTAINING SILICON AND TITANIUM BY GENERATING ELECTROMAGNETIC INTERACTION BETWEEN $SiO_2$ AND $FeTiO_3$ PARTICLES AND MAGNETIC WAVES

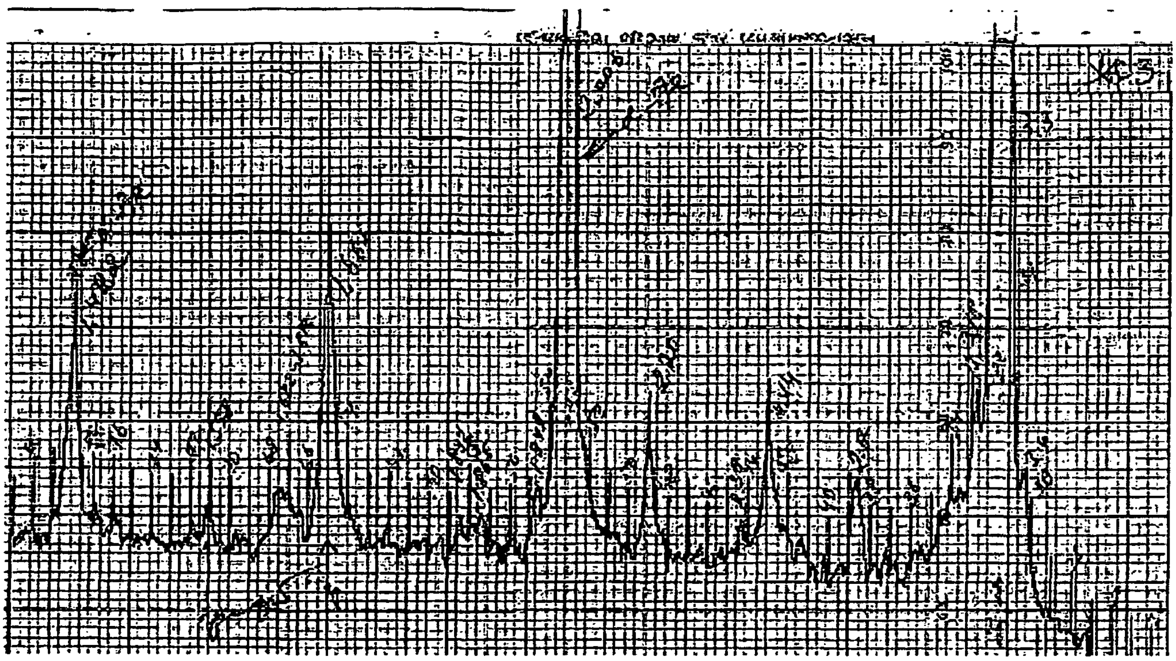

Fig.29.

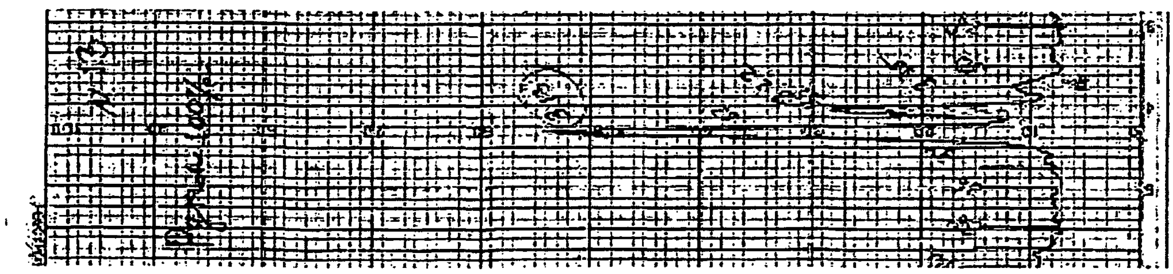

Fig.30.

METHOD FOR OBTAINING SILICON AND TITANIUM BY GENERATING ELECTROMAGNETIC INTERACTION BETWEEN $SiO_2$ AND $FeTiO_3$ PARTICLES AND MAGNETIC WAVES

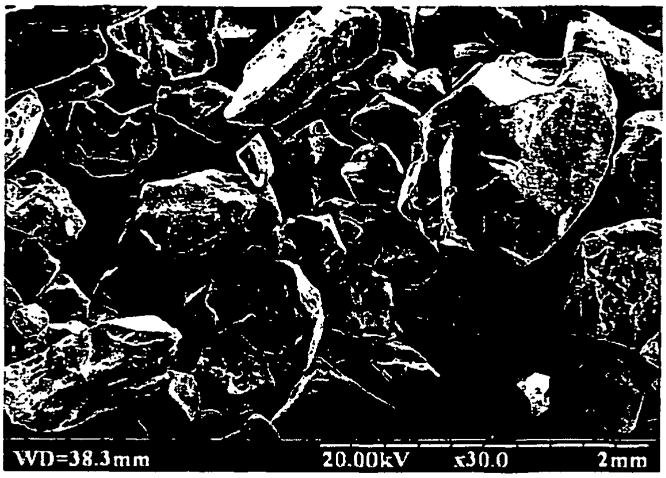

Fig.31.

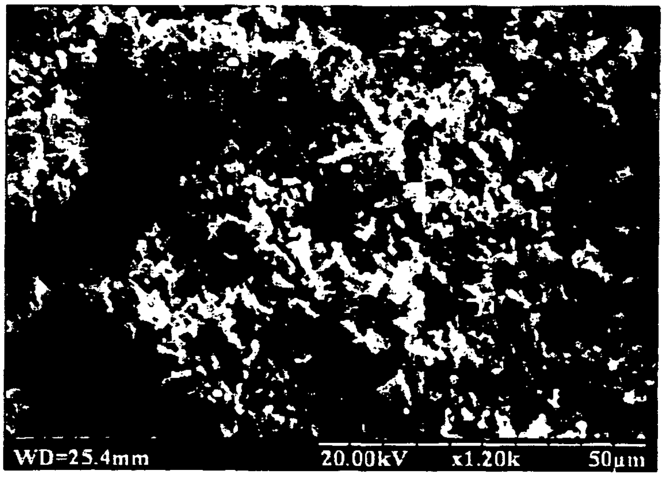

Fig.32.

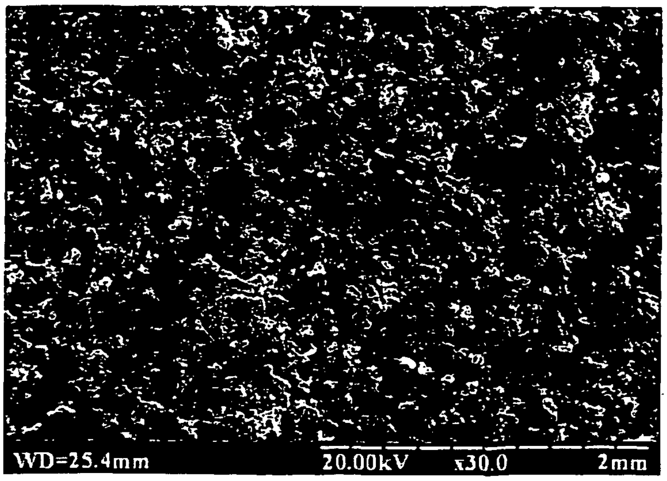

Fig.33.

METHOD FOR OBTAINING SILICON AND TITANIUM
BY GENERATING ELECTROMAGNETIC INTERACTION BETWEEN
$SiO_2$ AND $FeTiO_3$ PARTICLES AND MAGNETIC WAVES

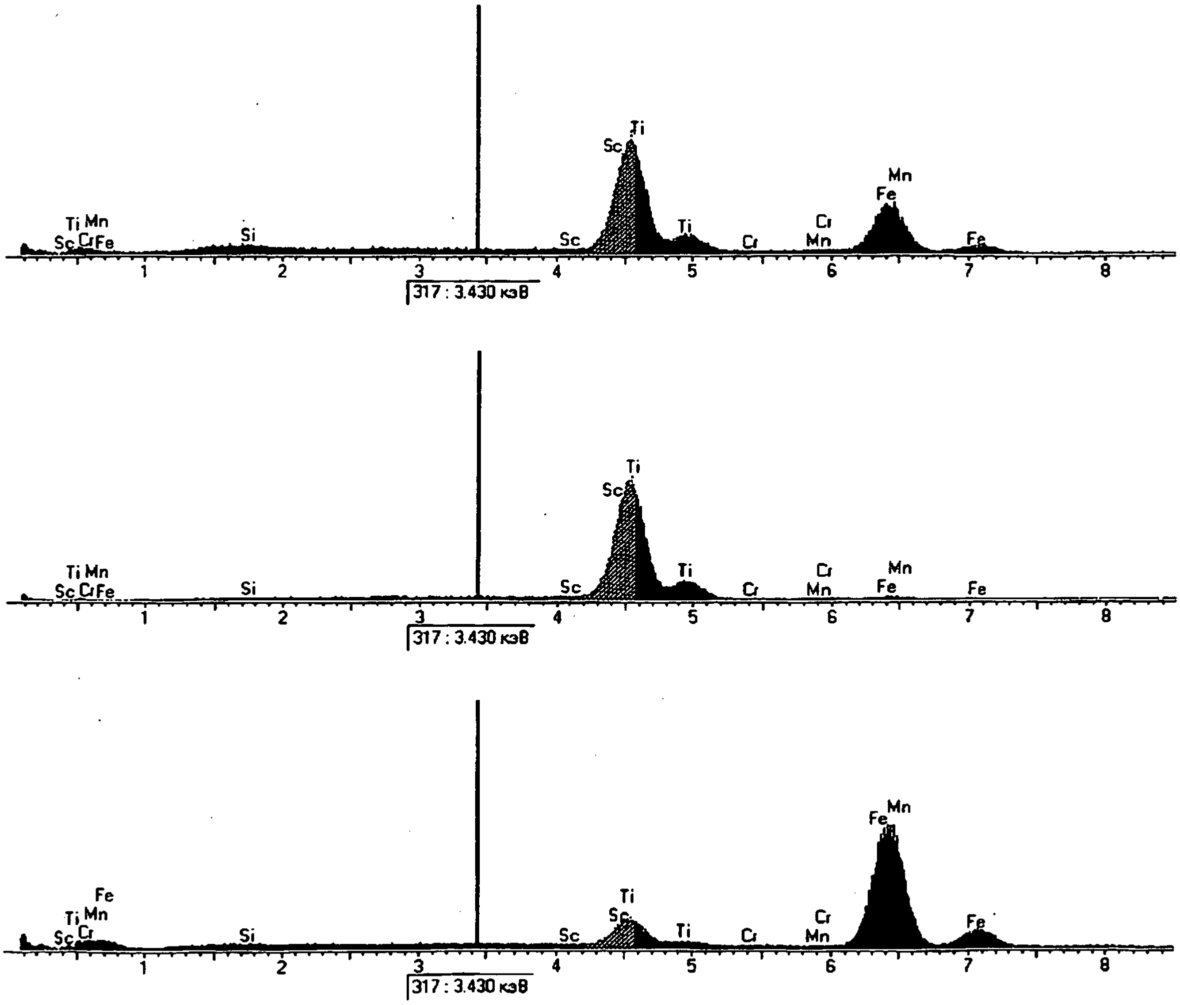


Fig.34.

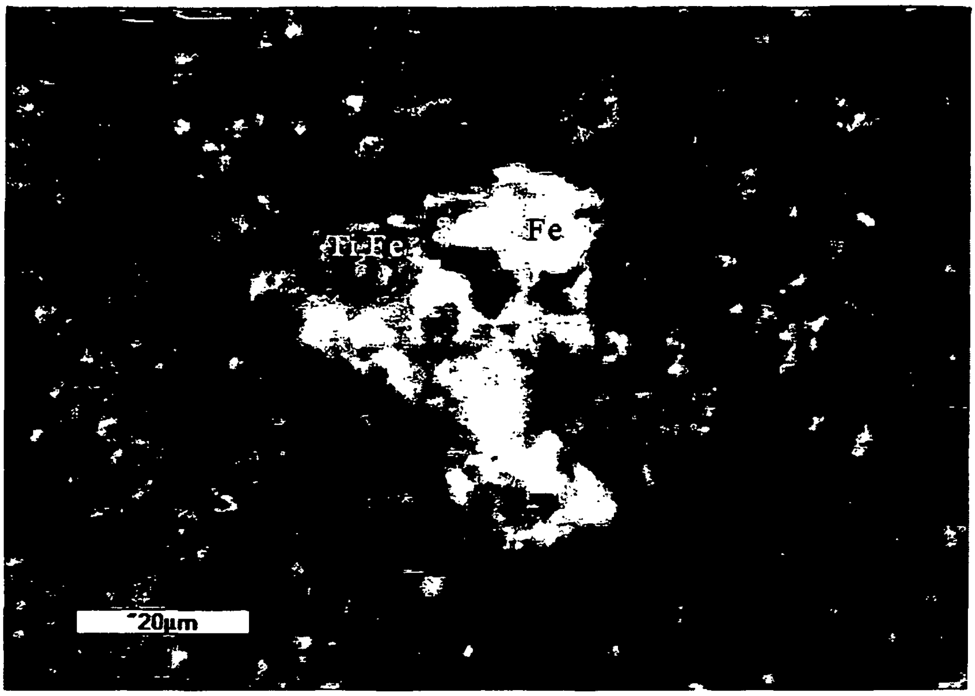


Fig.35.

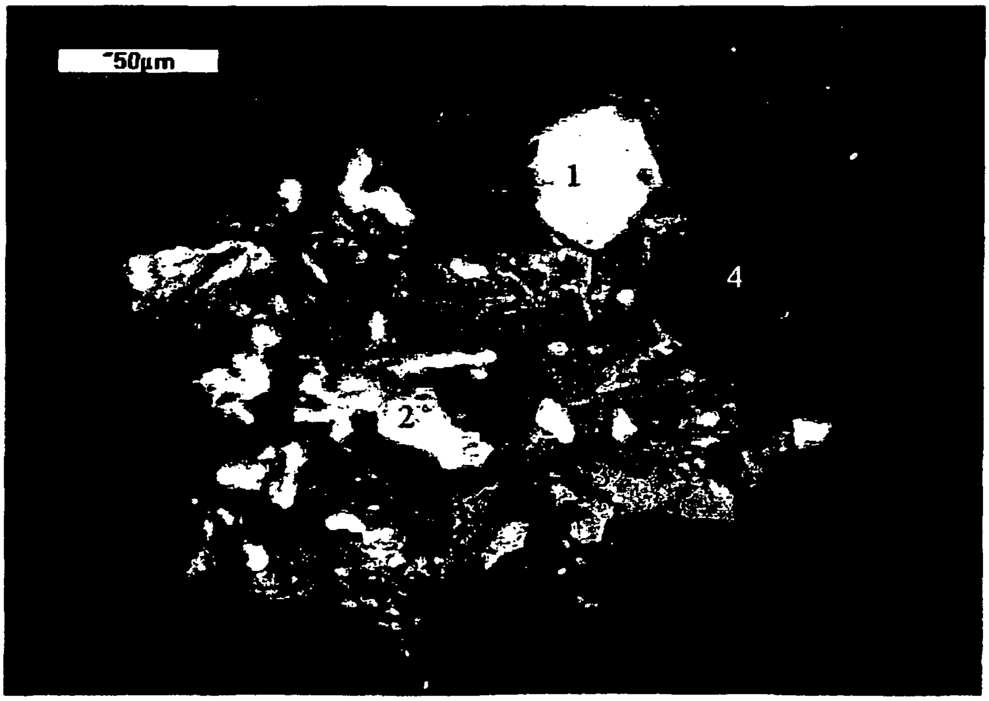


Fig.36.

METHOD FOR OBTAINING SILICON AND TITANIUM
BY GENERATING ELECTROMAGNETIC INTERACTION BETWEEN
$SiO_2$ AND $FeTiO_3$ PARTICLES AND MAGNETIC WAVES

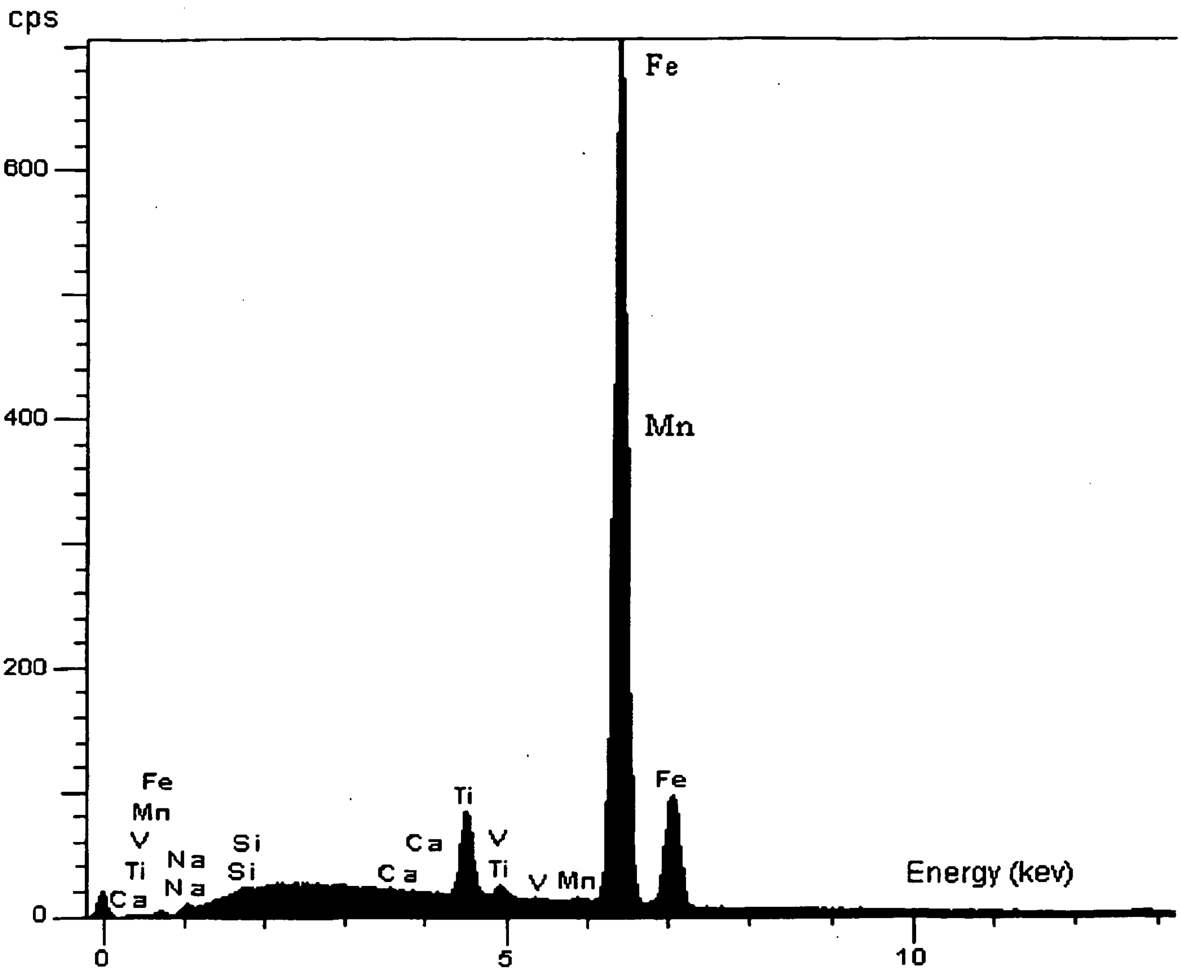


Fig.37.

METHOD FOR OBTAINING SILICON AND TITANIUM BY GENERATING ELECTROMAGNETIC INTERACTION BETWEEN $SiO_2$ AND $FeTiO_3$ PARTICLES AND MAGNETIC WAVES

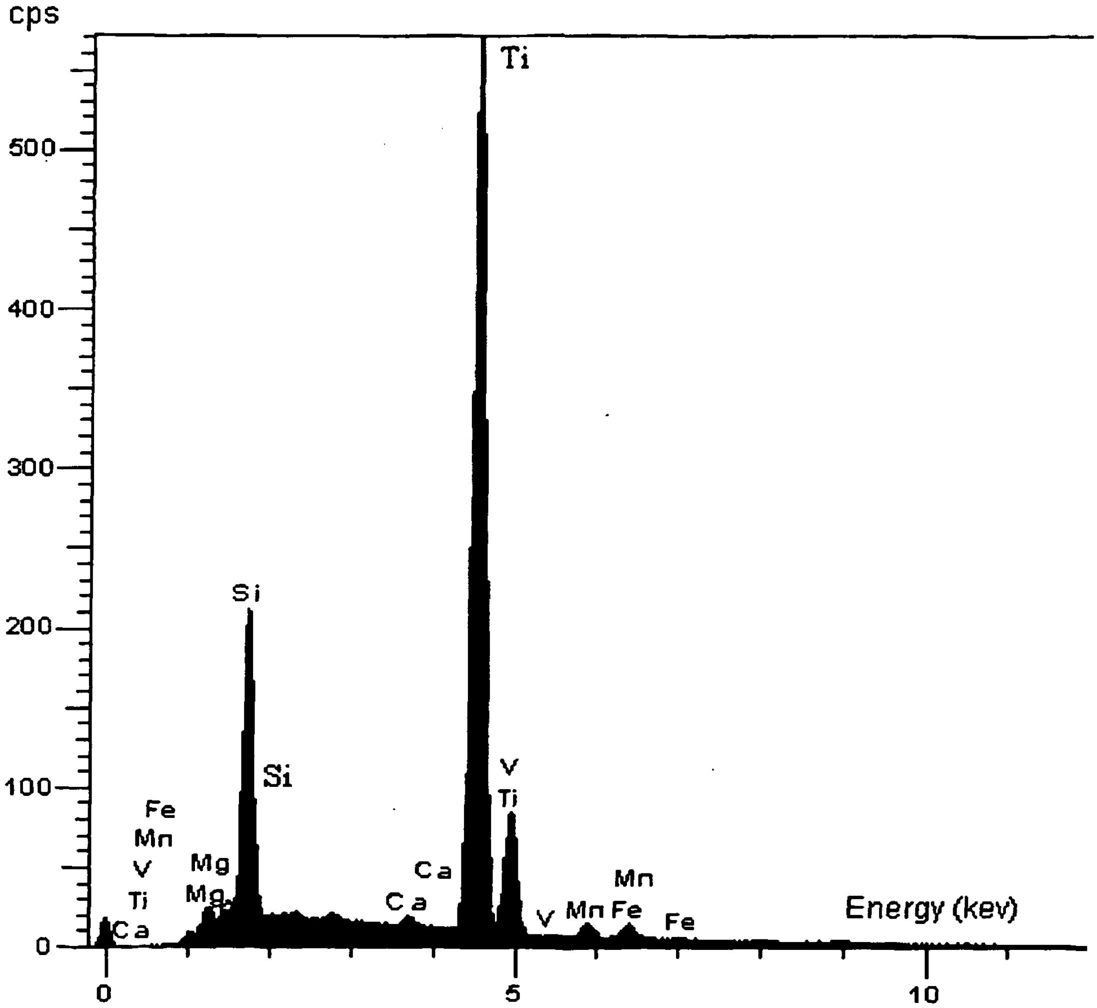


Fig.38.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 3286685 A
- US 4148814 A
- US 4150168 A
- US 4900411 A
- RU 2340551 C2
- RU 2334677 C1
- RU 2342320 C2
- US 7029632 B1
- US 5810934 A
- US 4930442 A
- US 5597623 A
- US 5382412 A
- US 20080272144 A1
- US 5023056 A1
- US 6365885 B1
- RU 2007104587 A1
- US 4786477 A
- US 5374413 A
- US 20080272114 A1
- US 5023056 A
- RU 2329196 C1
- RU 2007104587 A
- US 4532199 A
- US 4998503 A
- US 5521360 A
- US 6888094 A
- RU 2340551
- EP 2004012889 A
- DE 10353996
- US 10885237 B
- US 20090107290 A1
- UZ IAP03701
- RU 112004
- RU 2334667 C
- WO 2342320 C2
- US 20080272114 A
- US 6365885 B
- RU 2329196 C
- US 6888094 B
- US 20090107290 A


### Non-patent literature cited in the description


- **JORG KNIPPING et al.** High Purity Silicon Nanoparticles. *J.Nanosci.Nanotech.,* 2004, vol. 4 (8), 1039-1044
- **RUSTUM ROY et al.** Definite experimental evidence for MW Effects. *Mat Res Innovat,* 2002, vol. 6, 128-140
- **BAKANOV YU.** Proposal for Obtaining silicon polycrystalline in plasma of the MW discharge. *Project. Internet site,* February 2006
- **VERBITSKII I.L. ; KOVALENKO A.D. ; KOLESNIK V.G.** Skhema parametricheskogo preobrazovanita energii. *JINR Reports R9-90-371,* 1990
- O printsipe pryamogo preobrazovanita energii. **KOLESNIK V.G. ; VERBITSKII I.L. ; TSITOVICH P.A. et al.** Uskoriteli pryamogo dejstvita I SVCh generatory na ikh osnove. 1990, 247-259
- **KOLESNIK V.G. ; GELFELD A.YU. ; GELFELD T.M.** O dvizhenii chastits v elektromagnitnykh polyakh. *ASD UzSSR,* 1988, vol. 10, 26-29
- **VERBITSKII I.L.** On the method of solving the Helmholtz. *J.Math.Phys.,* 1981, vol. 22 (1), 32-38
- *J. MATH. PHYS.,* vol. 23 (4), 510-516
- **VERBITSKII I.L.** Obobshennyj proektsionnyj metod. *ASD USSR,* 1987, vol. 294 (1), 72-75